# EUROPEAN PATENT APPLICATION

(11) **EP 3 944 151 A1**
(43) Date of publication of application: **26.01.2022**
(21) Application number: 20778045.3
(22) Date of filing: 20.02.2020
(51) Int. Cl.: G06K 19/07, G06K 19/073, G06K 19/077, G06F 21/62, H04M 1/00

(54) **INFORMATION PROCESSING DEVICE, INFORMATION PROCESSING SYSTEM, INFORMATION PROCESSING METHOD, AND PROGRAM**

(30) Priority: 22.03.2019 JP 2019055605
(71) Applicant: FeliCa Networks, Inc., Tokyo 141-0032 (JP)
(72) Inventor: KUMAKURA, Erika, Tokyo 141-0032 (JP)
(74) Representative: D Young & Co LLP
(86) International application number: PCT/JP2020/006941
(87) International publication number: WO 2020/195415

(57) **Abstract**

A configuration that performs lock control such as unlocking of IC card function providing applications in various types of fine condition setting is realized. The configuration has a control section that executes lock control including a locking process in which use of an IC card function providing application is disabled and a lock unlocking process in which use of the IC card function providing application is enabled. On the basis of acquisition information of a lock unlocking decision application that is an application different from the IC card function providing application, the control section executes the lock control of the IC card function providing application. For example, in a case where a step count of a user counted by a step counting application has exceeded a specified step count that is a prespecified lock unlocking condition, the control section executes the lock unlocking process of the IC card function providing application.

## Description

### [Technical Field]

The present disclosure relates to an information processing apparatus, an information processing system, an information processing method, and a program. More specifically, the present disclosure relates to an information processing apparatus, an information processing system, an information processing method, and a program for performing an unauthorized use prevention process or a locking process in payment transactions and the like carried out by using an information processing apparatus such as a smartphone or a wearable device having IC card functions.

### [Background Art]

In recent years, mobile terminals such as smartphones, wrist-watch type wearable devices, and the like having electronic money functions, what is called IC card functions, such as payment functions, charge functions and furthermore credit card functions have been used increasingly.

By using those terminals (information processing apparatuses) having IC card functions, it becomes possible to simply make a payment for shopping or to eat and drink, and so on, or get on a train or a bus, without carrying cash.

By bringing IC cards or terminals having IC card functions close to reader/writers (R/W) and causing the IC cards or terminals and the reader/writers (R/W) to execute proximity communication between them, it is possible to perform authentication processes, payment processes, and the like.

By the proximity communication, the reader/writers perform processes including a process of subtracting a paid amount of money from the balance of electronic money recorded on a (non-contact type) IC card or terminal and writing in a necessary log on the card or terminal, and a process of reading out an ID number recorded on the (non-contact type) IC card or terminal, and authenticating the IC card or terminal.

Many of those (non-contact type) IC card services can be used by a user only bringing a target card or a terminal close to a reader/writer, and the user is not asked to input a PIN code or to sign at the time of use.

Accordingly, there is a problem about IC cards, smartphones, and wearable devices such as wrist-watch type wearable devices that they are unauthorizedly used by others who are not the owners of the cards or terminals.

Conventional technologies disclosing configurations for preventing such unauthorized use include the following documents, for example.

PTL 1 (Japanese Patent Laid-open No. 2015-194988) discloses a wearable device and a wearable-device control method. This document discloses a terminal that has wearing sensing means that senses whether or not a wearable device is worn on a body. The terminal performs lock control by which the wearable device is locked in a case where it is not sensed that the terminal is worn on a body in a state where the wearable device is not locked, and the wearable device is not locked in a case where it is sensed that the terminal is worn on a body in the state where the wearable device is not locked.

In addition, PTL 2 (Japanese Patent Laid-open No. 2009-152875) discloses a mobile terminal having a non-contact type IC card function section mounted thereon whose IC card function is locked in the normal state. In this configuration, lock unlocking control of the IC card function is performed by analyzing whether or not a button-pushing pattern of a user on the mobile terminal matches a registered pattern.

Furthermore, PTL 3 (Japanese Patent Laid-open No. 2016-153959) discloses a configuration in which analysis of acceleration of a wearable device is performed, it is decided whether or not the acceleration matches preregistered acceleration information, and a lock is unlocked only in a case where they match.

However, the configurations described in those conventional technologies merely disclose configurations in which it is determined whether or not a device user is a registered user and use by those other than registered users is prohibited.

In one actual supposed use form of a smartphone or a wearable device, for example, in some cases, one wants her/his child to carry the smartphone or the wearable device and wants to set the smartphone or the wearable device such that use of the smartphone or the wearable device is permitted at a store in an area near a school and is prohibited in other areas.

In addition, in another supposed use form, one wants to tolerate daytime use but wants to prohibit nighttime use.

The configurations disclosed in the conventional technologies described above cannot realize such fine control.

### [Citation List]

### [Patent Literature]

[PTL 1]
   Japanese Patent Laid-open No. 2015-194988
[PTL 2]
   Japanese Patent Laid-open No. 2009-152875
[PTL 3]
   Japanese Patent Laid-open No. 2016-153959

### [Summary]

### [Technical Problem]

The present disclosure has been made in view of the problems mentioned above, for example, and an object of the present disclosure is to provide an information processing apparatus, an information processing system, an information processing method, and a program that make it possible to perform control of a lock function which is a function to restrict use of an information processing apparatus such as a smartphone or a wearable device having IC card functions in accordance with finer conditions and situations.

### [Solution to Problem]

A first aspect of the present disclosure resides in an information processing apparatus including
a storage section configured to store a first application, and
a control section configured to acquire sensor information from an installed sensor and execute lock control of disabling use of the first application by prohibiting access to the storage section on a basis of the acquired sensor information.

Furthermore, a second aspect of the present disclosure resides in an information processing system including
a first information processing apparatus, and
a wearable device, in which
the wearable device is a device that is able to use a first application,
the first information processing apparatus transmits, to the wearable device, lock unlocking condition information to be used when lock control including a locking process of disabling use of the first application of the wearable device and a lock unlocking process of enabling use of the first application of the wearable device is executed, and
the wearable device
   receives the lock unlocking condition information from the first information processing apparatus, and stores the lock unlocking condition information on a memory, and
   compares acquisition information of a lock unlocking decision application that is an application different from the first application and the lock unlocking condition information stored on the memory and executes lock control of the first application.

Furthermore, a third aspect of the present disclosure resides in an information processing method executed in an information processing apparatus, in which
the information processing apparatus has a storage section storing a first application, and
a control section acquires sensor information from an installed sensor and executes lock control of the first application of disabling use of the first application by prohibiting access to the storage section on a basis of the acquired sensor information.

Furthermore, a fourth aspect of the present disclosure resides in an information processing method executed in an information processing system having a first information processing apparatus, and a wearable device, in which
the wearable device is a device that is able to use a first application,
the first information processing apparatus transmits, to the wearable device, lock unlocking condition information to be used when lock control including a locking process of disabling use of the first application of the wearable device and a lock unlocking process of enabling use of the first application of the wearable device is executed, and
the wearable device
   receives the lock unlocking condition information from the first information processing apparatus and stores the lock unlocking condition information on a memory, and
   compares acquisition information of a lock unlocking decision application which is an application different from the first application and the lock unlocking condition information stored on the memory and executes lock control of the first application.

Furthermore, a fifth aspect of the present disclosure resides in a program causing information processing to be executed in an information processing apparatus, in which
the information processing apparatus has a storage section storing a first application, and
the program causes a control section to acquire sensor information from an installed sensor and execute lock control of the first application of disabling use of the first application by prohibiting access to the storage section on a basis of the acquired sensor information.

Note that, for example, the program of the present disclosure is a program that can be provided in a storage medium or a communication medium that provides, in a computer-readable format, various program codes to an information processing apparatus or a computer system that can execute those various program codes. By providing such a program in the computer-readable format, processes according to the program are realized on the information processing apparatus or the computer system.

Still other objects, features, and merits of the present disclosure will become apparent from more detailed explanations based on embodiments and attached diagrams of the present disclosure mentioned below. Note that, in this specification, systems are a logical collective configuration of a plurality of apparatuses, but are not limited to ones having apparatuses of individual configurations that are located in the same housing.

According to the configuration of one embodiment of the present disclosure, a configuration that performs lock control such as unlocking of IC card function providing applications in various types of fine condition setting is realized.

Note that the advantages described in this specification are presented merely for illustration, but not for limitation, and there may be additional effects.

### [Brief Description of Drawings]

[FIG. 1]

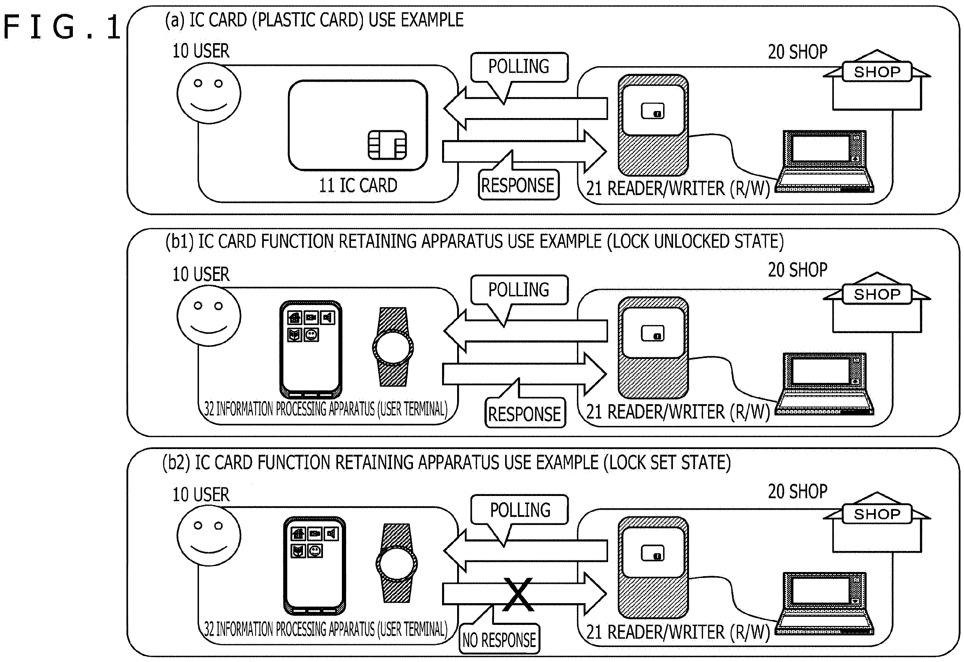

   FIG. 1 is a diagram for explaining the overview of an IC card function locking process.
[FIG. 2]

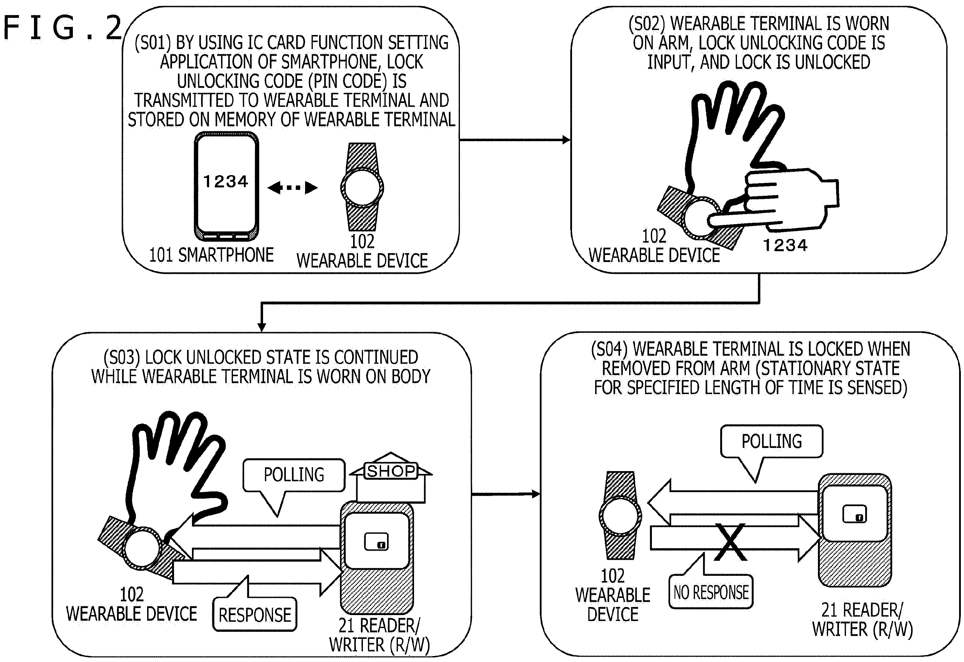

   FIG. 2 is a diagram for explaining one example of an IC card function locking process and unlocking process of a wearable device.
[FIG. 3]

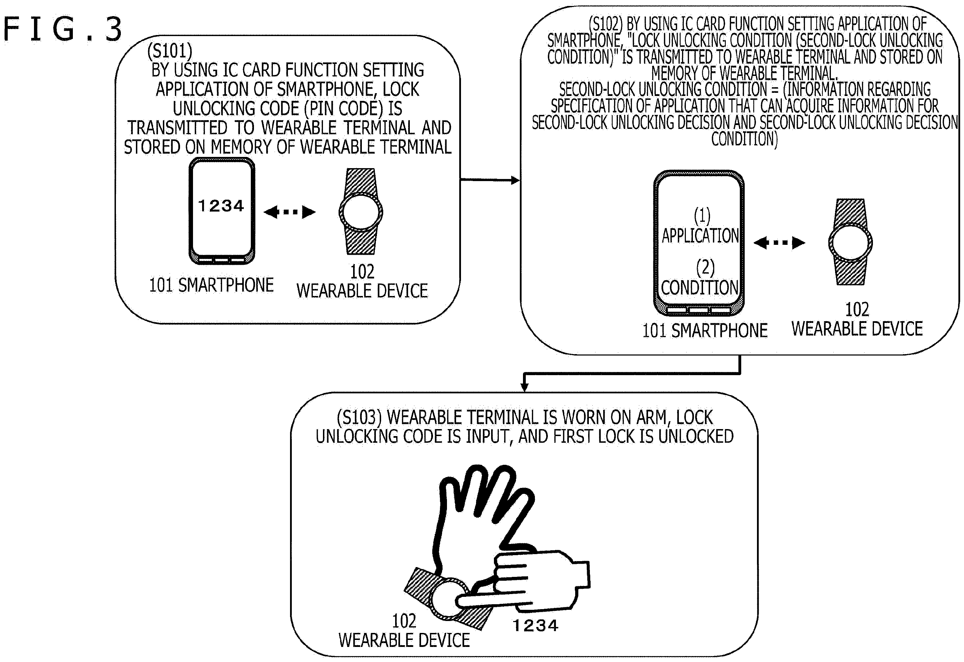

   FIG. 3 is a diagram for explaining the overview of IC card function lock control in an information processing apparatus of the present disclosure.
[FIG. 4]

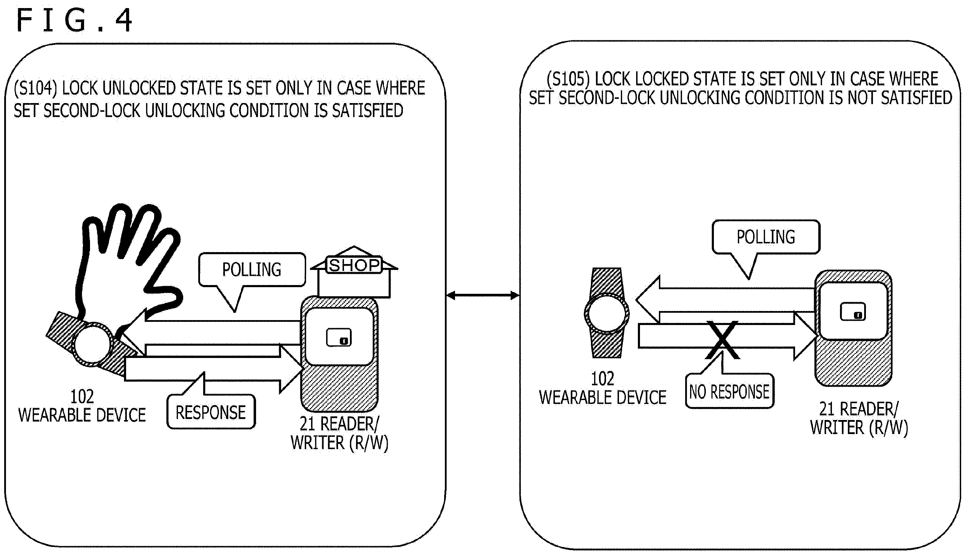

   FIG. 4 is a diagram for explaining the overview of the IC card function lock control in the information processing apparatus of the present disclosure.
[FIG. 5]

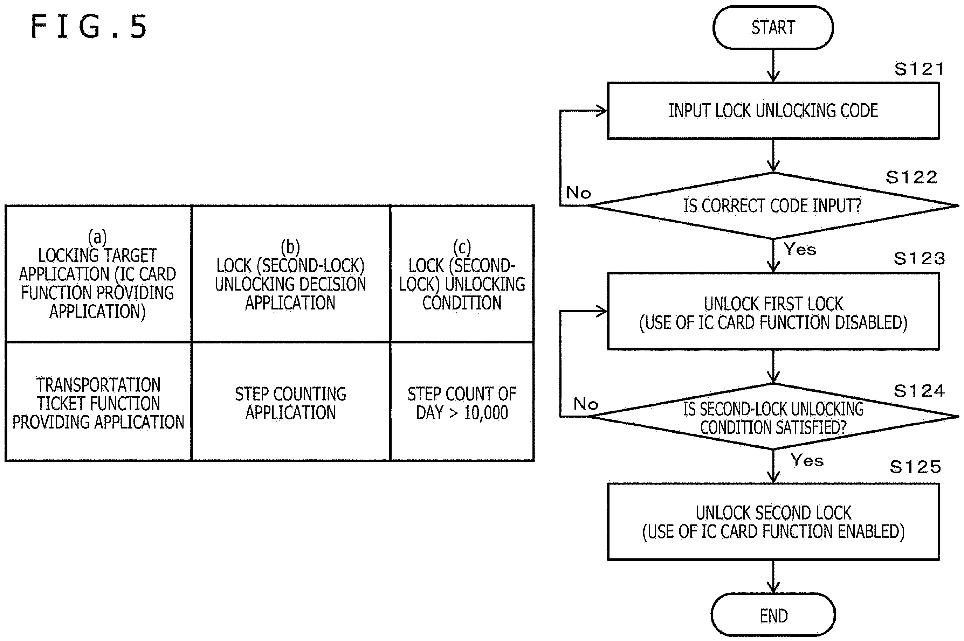

   FIG. 5 is a diagram depicting a flowchart for explaining an example of condition setting of a second lock for the information processing apparatus and a lock control process sequence according to the setting.
[FIG. 6]

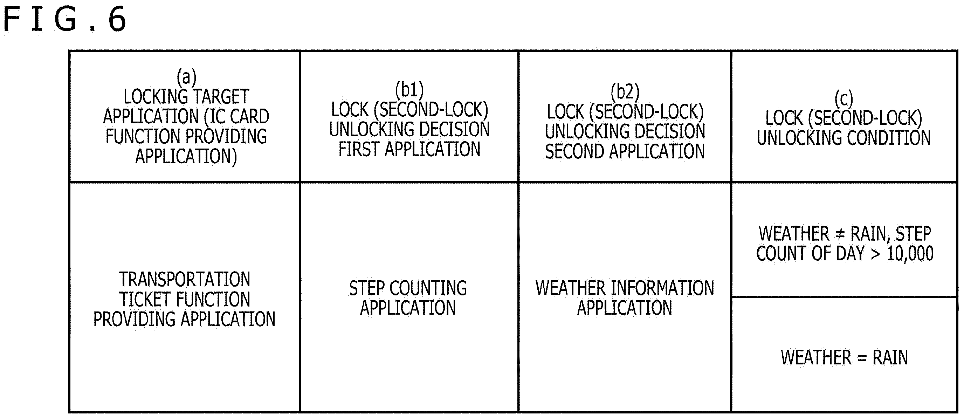

   FIG. 6 is a diagram for explaining an example of a process of controlling the second lock on the basis of acquisition information of a plurality of applications.
[FIG. 7]

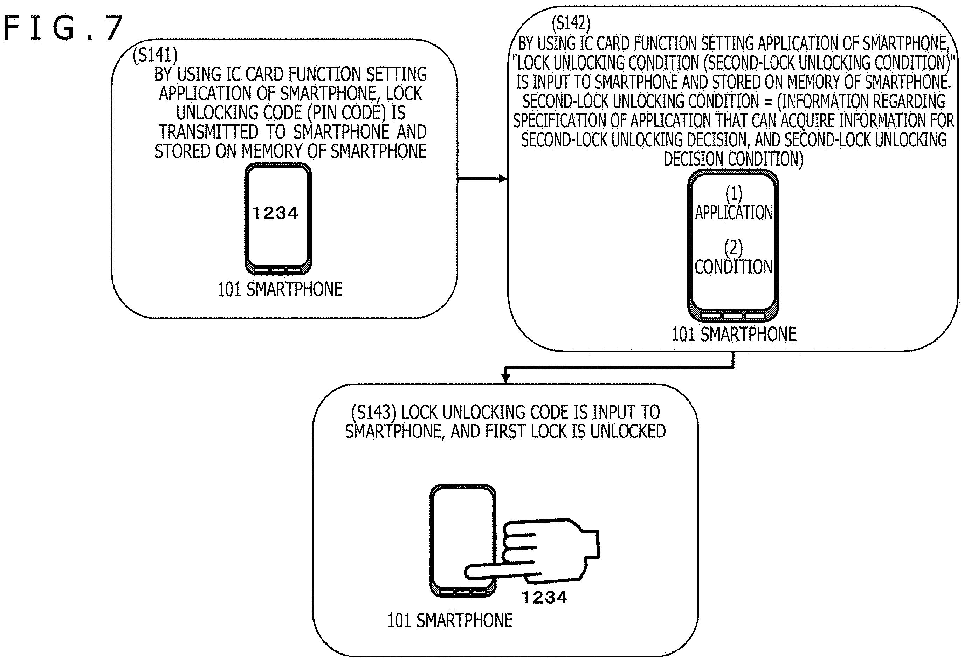

   FIG. 7 is a diagram for explaining a sequence of IC card function lock control of a smartphone.
[FIG. 8]

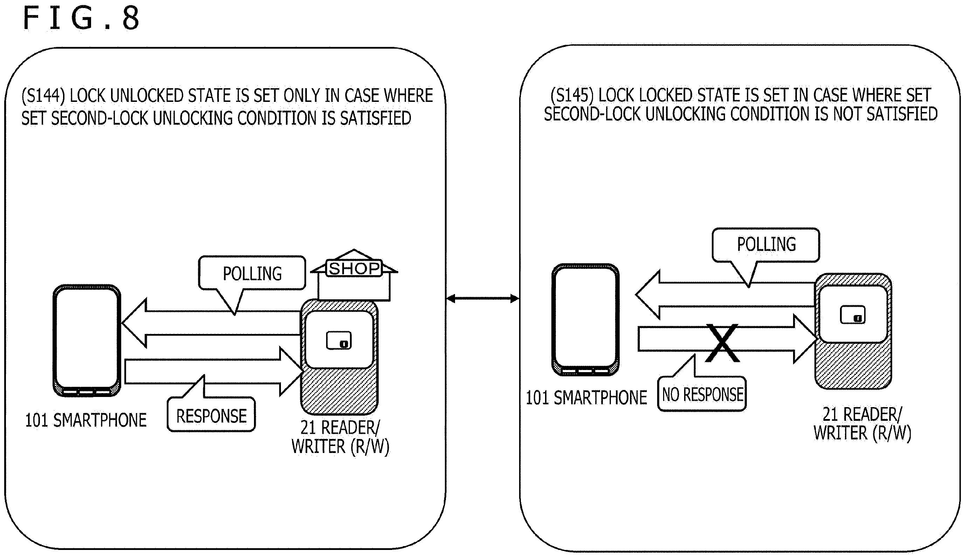

   FIG. 8 is a diagram for explaining the sequence of the IC card function lock control of the smartphone.
[FIG. 9]

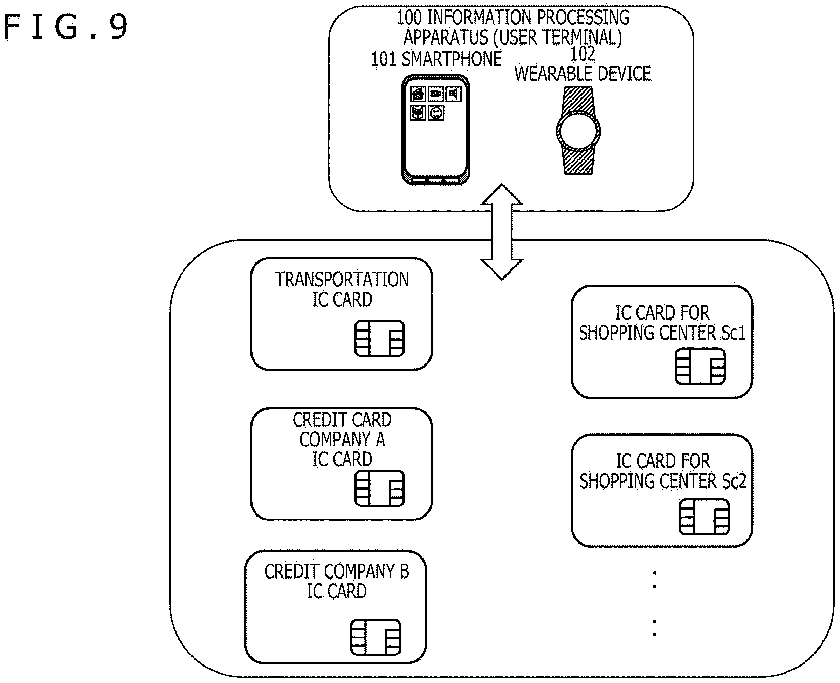

   FIG. 9 is a diagram for explaining an example of various applications that are stored on the information processing apparatus (user terminal) of the present disclosure and provide IC card functions.
[FIG. 10]

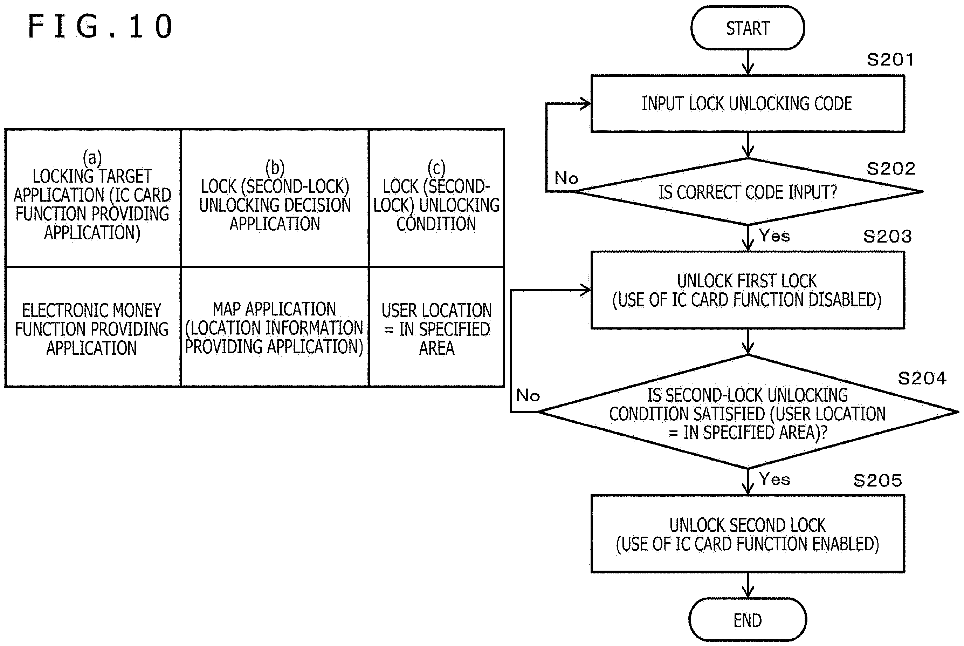

   FIG. 10 is a diagram for explaining a specific example of lock control executed by the information processing apparatus of the present disclosure.
[FIG. 11]

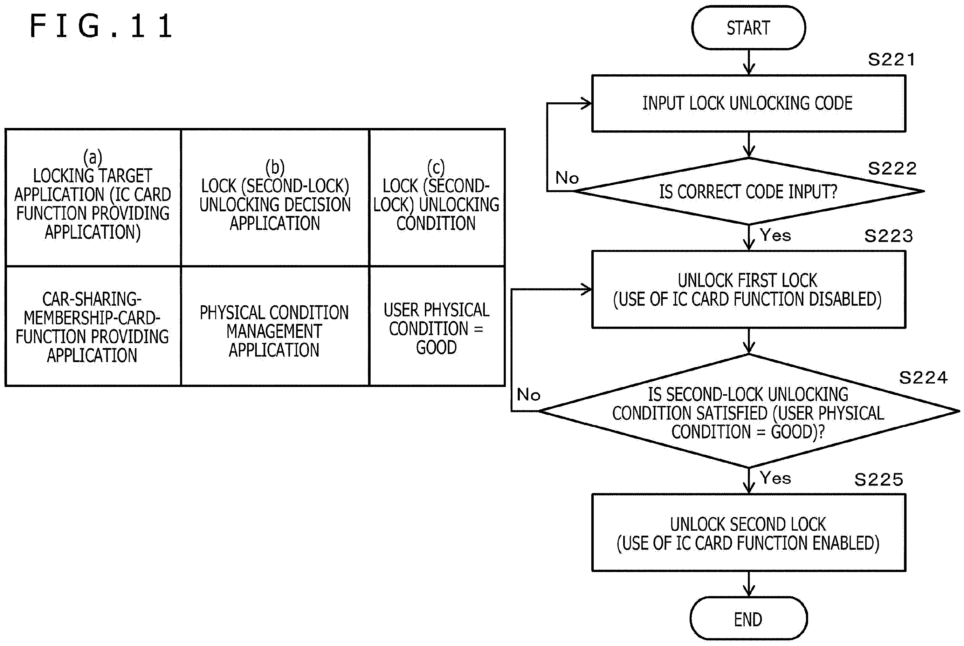

   FIG. 11 is a diagram for explaining a specific example of the lock control executed by the information processing apparatus of the present disclosure.
[FIG. 12]

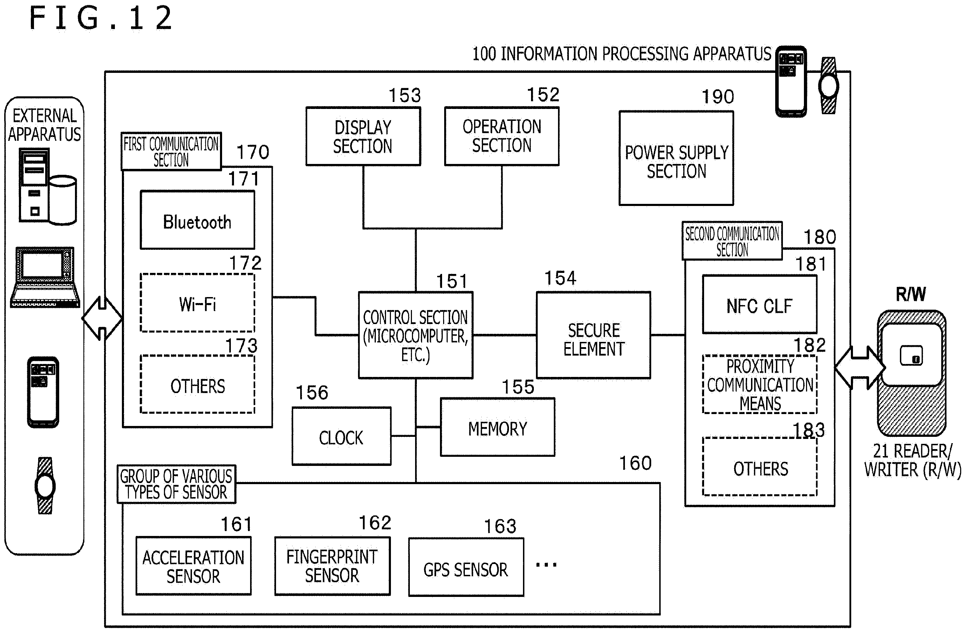

   FIG. 12 is a diagram depicting a configuration example of the information processing apparatus of the present disclosure.
[FIG. 13]

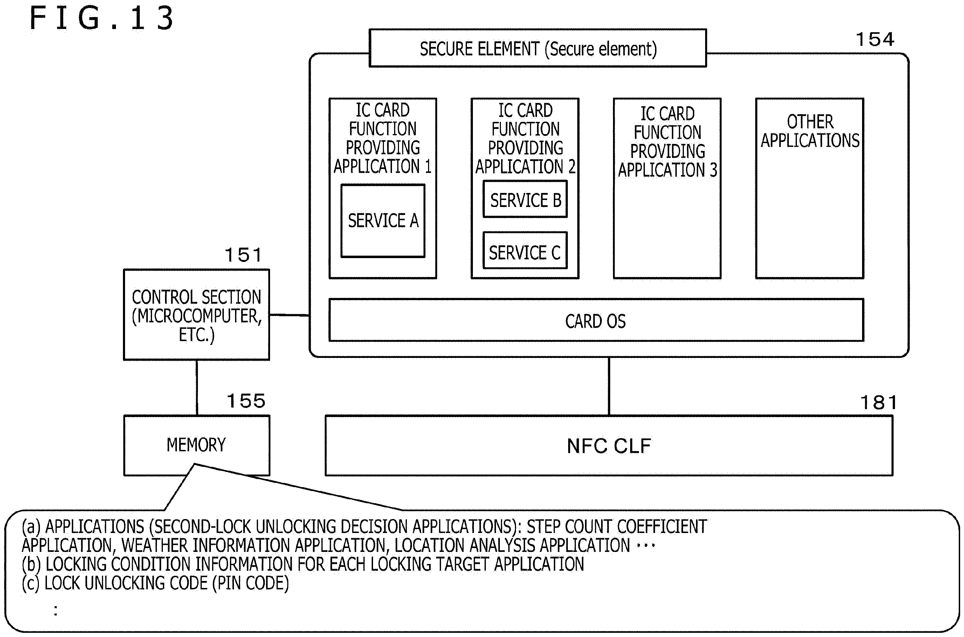

   FIG. 13 is a diagram depicting a configuration example of a secure element of the information processing apparatus of the present disclosure.
[FIG. 14]

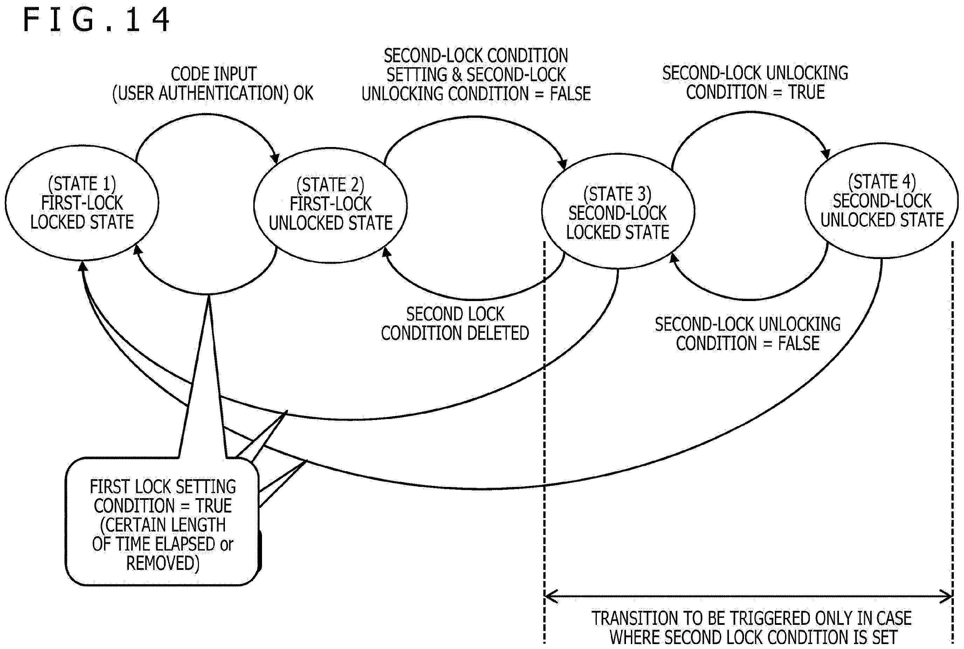

   FIG. 14 is a diagram for explaining one example of a state transition process of an IC card function providing application stored on the information processing apparatus of the present disclosure.
[FIG. 15]

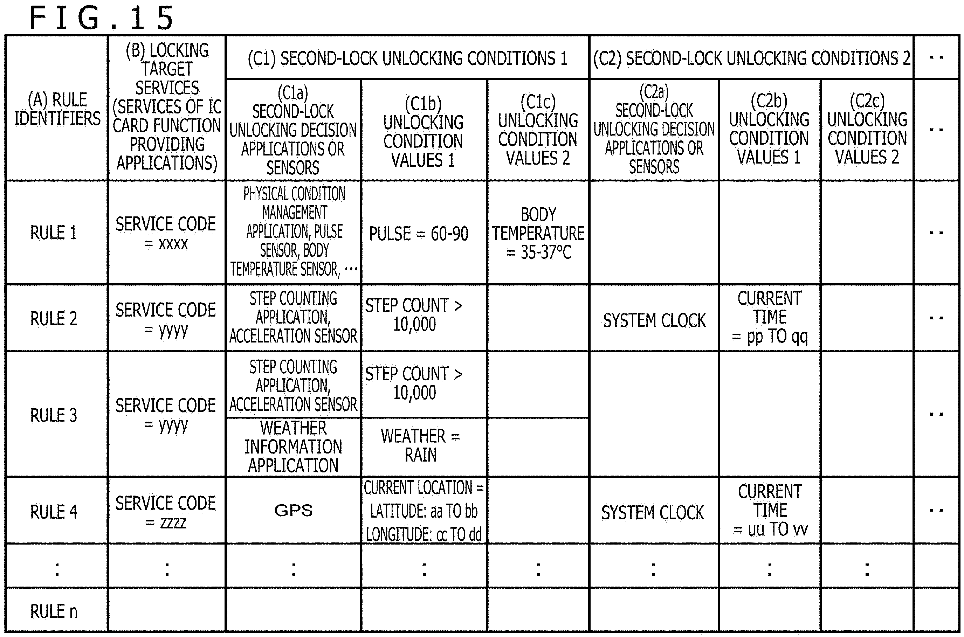

   FIG. 15 is a diagram for explaining a data example of second-lock unlocking condition information stored on a memory of the information processing apparatus.
[FIG. 16]

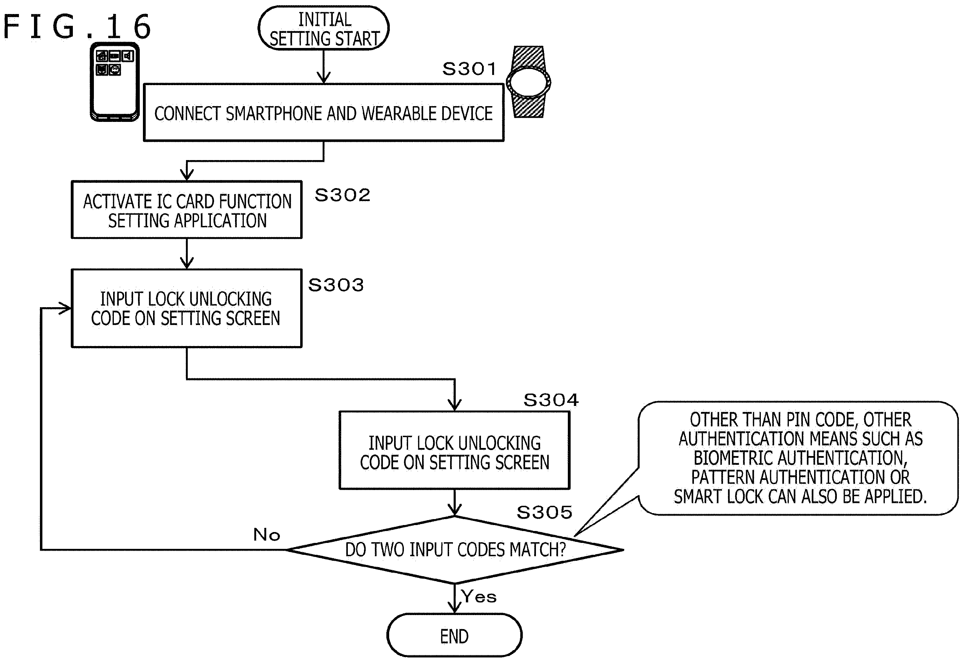

   FIG. 16 is a diagram depicting a flowchart for explaining a sequence of an initial setting process of a wearable device.
[FIG. 17]

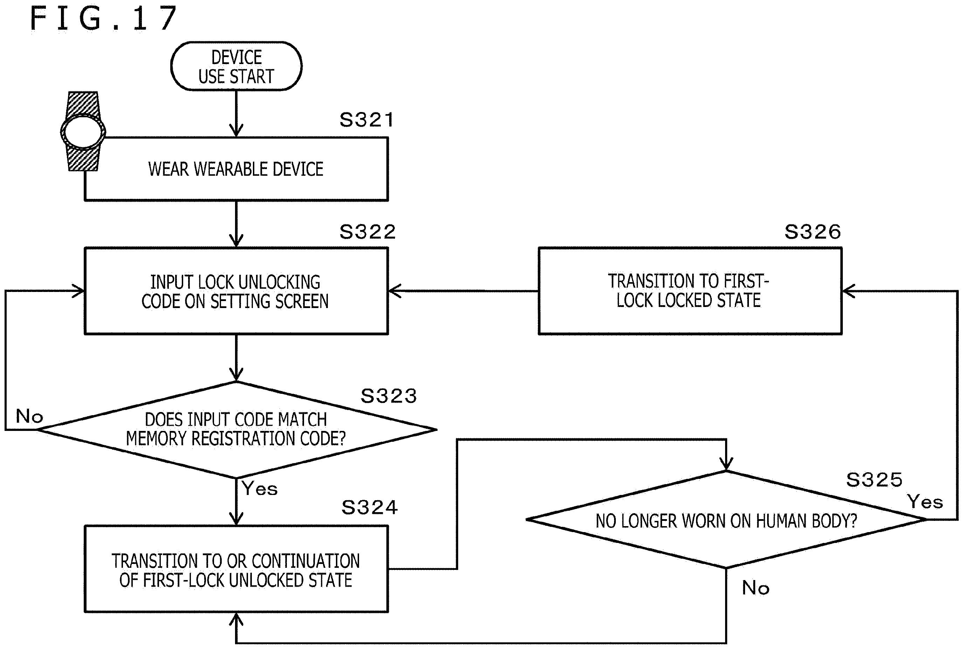

   FIG. 17 is a diagram depicting a flowchart for explaining a sequence of a first-lock unlocking process of the wearable device.
[FIG. 18]

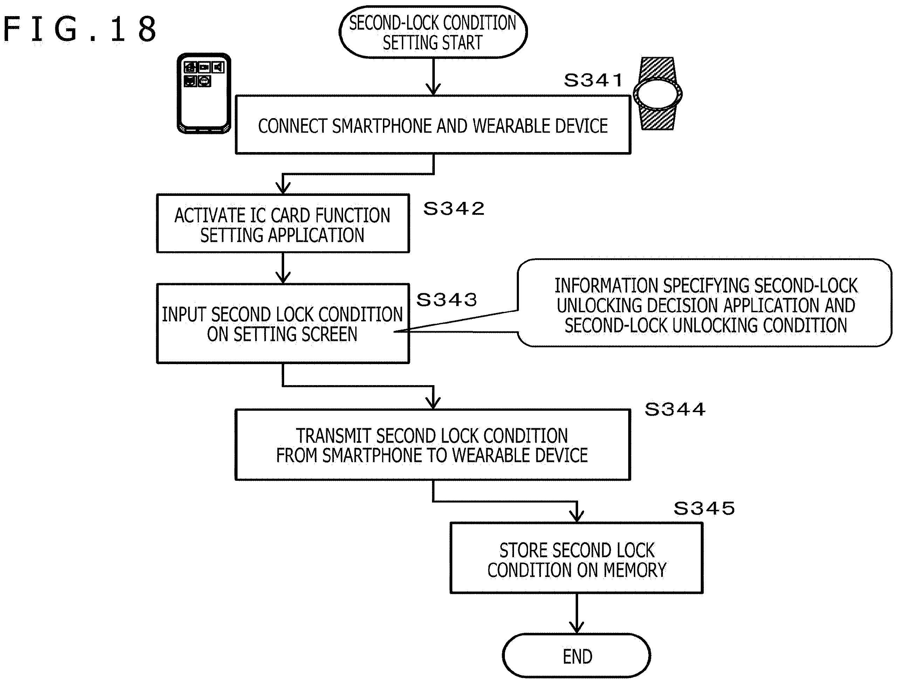

   FIG. 18 is a diagram depicting a flowchart for explaining a sequence of a second-lock unlocking condition setting process for the wearable device.
[FIG. 19]

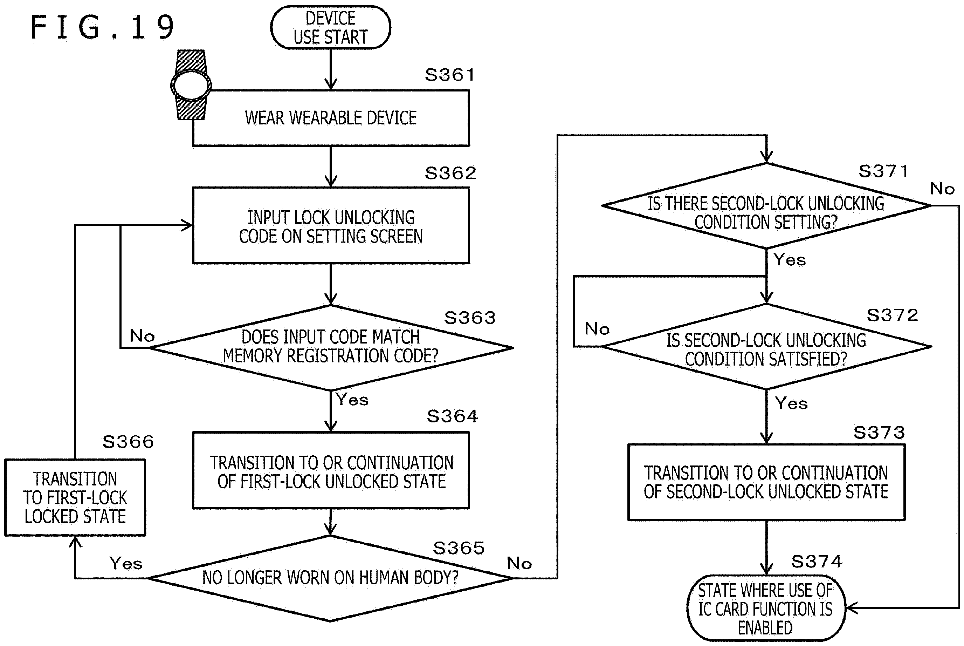

   FIG. 19 is a diagram depicting a flowchart for explaining a sequence of a first-lock and second-lock unlocking process of the wearable device.
[FIG. 20]

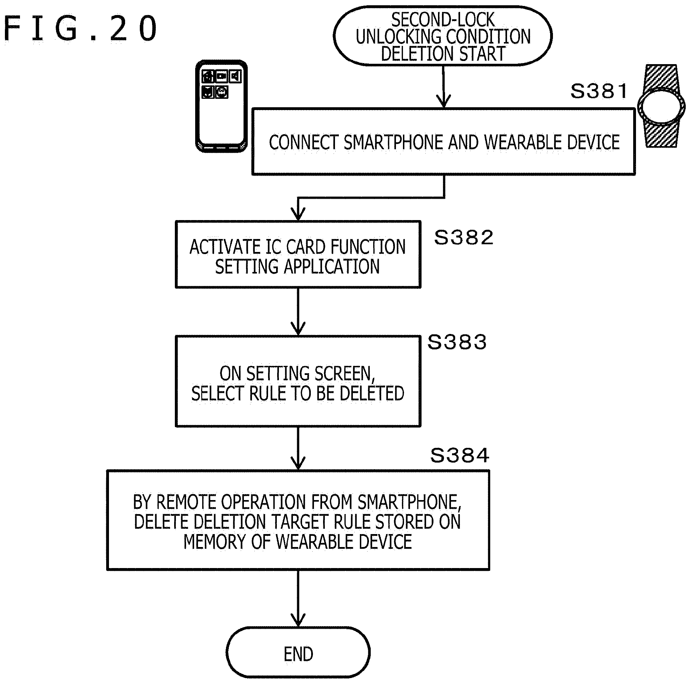

   FIG. 20 is a diagram depicting a flowchart for explaining a sequence of a second-lock unlocking condition deletion process of the wearable device.
[FIG. 21]

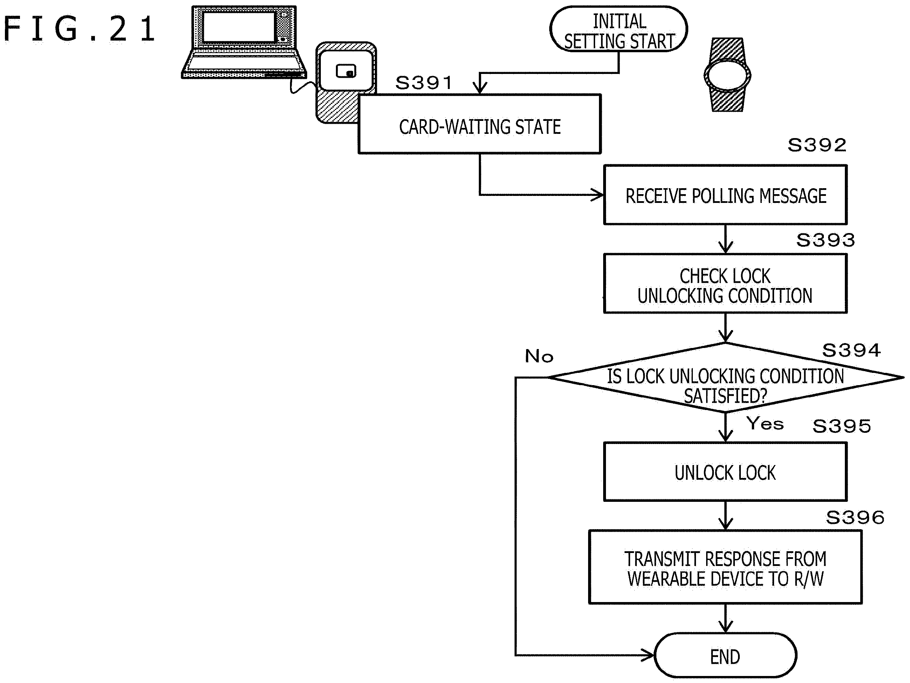

   FIG. 21 is a diagram depicting a flowchart for explaining a sequence of a lock unlocking process of the wearable device on the basis of command input from a reader/writer.
[FIG. 22]

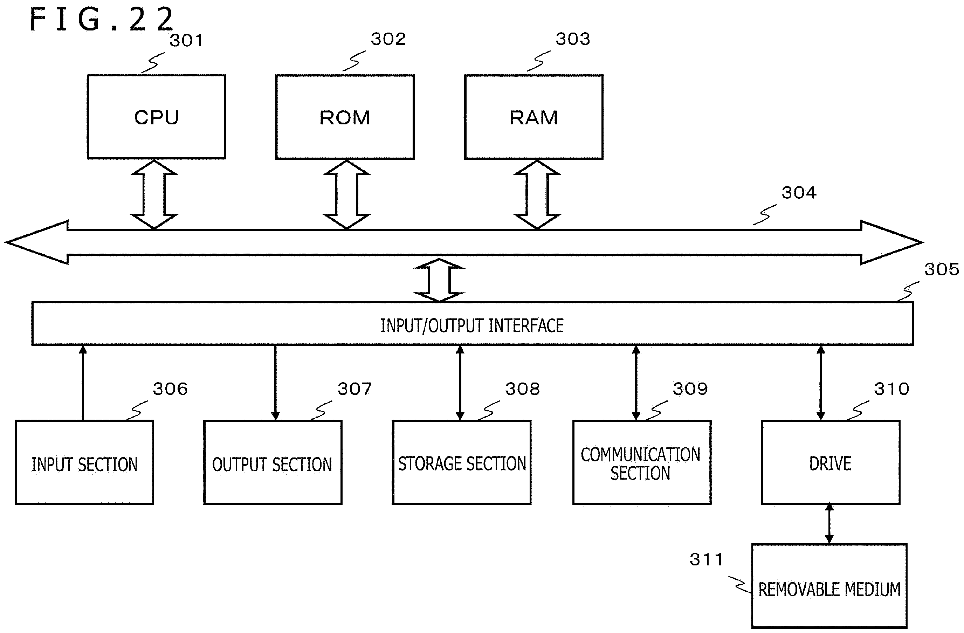

   FIG. 22 is a diagram for explaining a configuration example of the information processing apparatus.

### [Description of Embodiments]

Hereinafter, details of an information processing apparatus, an information processing system, an information processing method, and a program of the present disclosure are explained with reference to the diagrams. Note that the explanation is given in accordance with the following items.
1. About Overview of IC Card Function Locking Process
2. About IC Card Function Locking Process in Information Processing Apparatus of Present Disclosure
3. About Example of Condition Setting of Second Lock that can be Set by User and Specific Example of Lock Control Process
4. About Process Example of IC Card Function Lock Control of Smartphone
5. About Specific Examples of IC Card Function Providing Applications to be Locking Targets
6. About Configuration Example of Information Processing Apparatus
7. About Sequences of Processes Executed by Information Processing Apparatus
8. About Other Embodiments
9. About Hardware Configuration Example of Information Processing Apparatus
10. Summary of Configuration of Present Disclosure

### [1. About Overview of IC Card Function Locking Process]

First, the overview of an IC card function locking process is explained with reference to FIG. 1, and subsequent diagrams.

There is a problem about IC cards, smartphones, and wearable devices such as wrist-watch type wearable devices that they are unauthorizedly used by others who are not the owners of the cards or apparatuses.

As a configuration to prevent such unauthorized use, there is a configuration to lock IC card functions.

The overview of an IC card function locking process is explained with reference to FIG. 1.

FIG. 1 depicts the following three types of IC card function use example.
(a) Use example of an IC card (plastic card)
(b1) Use example (lock unlocked state) of an IC card function retaining apparatus (a smartphone, a wearable device, etc.)
(b2) Use example (lock set state) of an IC card function retaining apparatus (a smartphone, a wearable device, etc.)

(a) Use example of an IC card (plastic card) is a use example of a plastic-card type IC card.

A user 10 depicted in (a) in FIG. 1 brings an IC card 11 depicted in (a) in FIG. 1, that is, a plastic-card type IC card 11, close to a reader/writer 21 of a shop 20. When proximity communication between the IC card 11 and the reader/writer 21 becomes possible, the reader/writer 21 executes polling which is a request to capture a target card in order to read out necessary information (authentication information, an ID, balance information, etc.) from the IC card 11. In response to this polling, the IC card 11 executes a response process of acquiring the necessary information from a memory of the IC card 11 and providing the necessary information to the reader/writer 21, or the like, and a payment process or the like is executed.

The plastic-card type IC card 11 depicted in (a) does not have a lock function. That is, use of the IC card 11 is enabled always.

In contrast to this, in configurations depicted in (b1) and (b2) in FIG. 1 in which an information processing apparatus (user terminal) 32 including a smartphone, a wearable device, or the like is given an IC card function, an IC card function locking process, that is, setting for disabling use of the IC card function, becomes possible.

(b1) depicts a use example in which the IC card function of the information processing apparatus (user terminal) 32 including a smartphone, a wearable device, or the like is set to a lock unlocked state (lock disabled state).

In this case, processes similar to those depicted in (a) are executed. That is, when the information processing apparatus (user terminal) 32 including a smartphone, a wearable device, or the like is brought close to the reader/writer 21 of the shop 20, and proximity communication between the information processing apparatus (user terminal) 32 and the reader/writer 21 becomes possible, the reader/writer 21 executes polling to the information processing apparatus (user terminal) 32. In response to the polling, the information processing apparatus (user terminal) 32 executes a response process of acquiring necessary information from a memory of the information processing apparatus (user terminal) 32 and providing the necessary information to the reader/writer 21, or the like, and a payment process or the like is executed.

(b2) depicts a use example in which the IC card function of the information processing apparatus (user terminal) 32 including a smartphone, a wearable device, or the like is set to a lock set state (lock enabled state).

In this case also, when the information processing apparatus (user terminal) 32 including a smartphone, a wearable device, or the like is brought close to the reader/writer 21 of the shop 20, and proximity communication between the information processing apparatus (user terminal) 32 and the reader/writer 21 becomes possible, the reader/writer 21 executes polling to the information processing apparatus (user terminal) 32. However, the information processing apparatus (user terminal) 32 does not perform a process as a response to the polling because the IC card function is in the lock set state. As a result, a payment process or the like is not executed.

In this manner, the information processing apparatus (user terminal) 32 including a smartphone, a wearable device, or the like has a configuration that is capable of an IC card function locking process and capable of preventing unauthorized use by others, for example.

Note that a clock type terminal is depicted as a wearable device in FIG. 1. A typical sequence of an IC card function locking process and unlocking process of such a wearable device is explained with reference to FIG. 2.

FIG. 2 is a diagram for explaining one example of an IC card function locking process (lock enabling process), and lock unlocking process (lock disabling process) of a wearable device. The IC card function locking process and unlocking process of the wearable device are executed in accordance with a procedure of Steps S01 to S04 depicted in FIG. 2. A process at each step is explained.

### (Step S01)

First, at Step S01, by using a setting screen of an IC card function setting application of a smartphone 101, a lock unlocking code (PIN code) is transmitted to a wearable device 102 and stored on a memory of the wearable device 102.

### (Step S02)

Next, at Step S02, the wearable device 102 is worn on an arm, the lock unlocking code is input, and a lock of an IC card function installed on the wearable device 102 is unlocked.

### (Step S03)

As depicted as Step S03, while a user wears the wearable device 102 on her/his arm, the lock unlocked state continues, and the IC card function can be used. State checking as to whether or not the user wears the wearable device 102 on her/his arm is executed on the basis of sensing information of an acceleration sensor in the wearable device 102, sensing information of a vein sensor in the wearable device 102, or the like, for example.

### (Step S04)

As depicted as Step S04, when the user removes the wearable device 102 from her/his arm and leaves the wearable device 102 untouched, the IC card function of the wearable device 102 is locked. This process is also executed on the basis of sensing information of the acceleration sensor in the wearable device 102, sensing information of the vein sensor in the wearable device 102, or the like, for example.

After the transition to the locked state, the IC card function cannot be used.

In a case where the user wants to use the IC card function again, the user is only required to execute the process at Step S02.

### [2. About IC Card Function Locking Process in Information Processing Apparatus of Present Disclosure]

The IC card function locking process explained with reference to FIG. 1 and FIG. 2 is lock control in an extremely limited condition and does not realize flexible lock control according to various use situations of the user.

That is, it is not possible to realize fine setting like, for example, making a child carry a smartphone or a wearable device, permitting use of the smartphone or the wearable device at a store in an area near a school, and prohibiting use of the smartphone or the wearable device in other areas. In addition, it is not possible to realize lock control of tolerating daytime use, but prohibiting nighttime use.

IC card function lock control in an information processing apparatus of the present disclosure explained below is to realize such various types of fine lock control.

For example, a user can freely set locking conditions of an IC card function in the information processing apparatus.

Specifically, in accordance with information obtained by using sensors or applications provided to the information processing apparatus, it is possible to execute an IC card function locking process, that is, a process of starting a lock enabled state = IC card function use disabled state, and a lock unlocking process, that is, a process of starting a lock disabled state = IC card function use enabled state.

Note that, other than the IC card used for a payment process, the IC card of the present disclosure includes various IC cards such as IC cards used as electronic lock keys, admission permits, or ID cards. It may be of any format of a non-contact type IC card, and a contact type IC card. Note that in a case where the IC card is a contact type IC card, communication with a reader/writer is performed by a communication method that uses a contact point, instead of proximity communication.

The overview of the IC card function lock control in the information processing apparatus of the present disclosure is explained with reference to FIG. 3 and FIG. 4.

FIG. 3 to FIG. 4 are diagrams for explaining one example of an IC card function locking process and unlocking process of a wearable device, similarly to FIG. 2 explained earlier. The IC card function locking process and unlocking process of the wearable device are executed in accordance with a procedure of Steps S101 to S105 depicted in FIG. 3 to FIG. 4. A process at each step is explained.

### (Step S101)

First, at Step S101, by using the setting screen of the IC card function setting application of the smartphone 101, a lock unlocking code (PIN code) is transmitted to the wearable device 102 and stored on the memory of the wearable device 102.

### (Step S102)

Next, at Step S102, by using the setting screen of the IC card function setting application of the smartphone 101,
"lock unlocking condition (second-lock unlocking condition)" is transmitted to the wearable device 102 and stored on the memory of the wearable device 102.

Note that, in the present embodiment, a lock to be unlocked by using the lock unlocking code (PIN code) is defined as a first lock, and a lock to be unlocked on the basis of information other than the lock unlocking code (PIN code), for example, information obtained by using application or sensor information, is defined as a second lock.

Note that instead of the lock unlocking code (PIN code), it is also possible to use, for unlocking of the first lock, what is called "pattern authentication" which is authentication that prompts a user to touch a plurality of points displayed on a panel in a particular order, or biometric authentication that uses bioinformation such as a fingerprint, an iris, or the face of an owner. In that case, information other than the information used for unlocking of the first lock is used for unlocking of the second lock.

Note that the second-lock unlocking condition stored on the memory of the wearable device 102 includes information that specifies applications or sensors for acquiring information for second-lock unlocking decision and second-lock unlocking decision conditions.

Specifically, for example, conditions like the following ones are set:
Application specifying information = location information acquisition application, and
Second-lock unlocking condition = that the current location is within a specified particular area.
Note that specific examples are explained in detail in the following paragraphs.

### (Step S103)

Next, at Step S103, the wearable device 102 is worn on an arm, the lock unlocking code is input, and the first lock of the IC card function installed on the wearable device 102 is unlocked.

However, it should be noted that even if the first lock is unlocked, it is not necessarily possible to use the IC card function of the wearable device 102.

In a case where the second lock is set for the wearable device 102, it becomes possible to use the IC card function of the wearable device 102 only after the second-lock unlocking condition set at Step S102 is satisfied.

Specifically, the IC card function of the wearable device 102 can be used in the state of Step S104 depicted in FIG. 4.

### (Step S104)

Step S104 is a process to be performed in a case where a control section that executes the IC card function locking process and lock unlocking process of the wearable device 102 has decided that the second-lock unlocking condition set at Step S102 is satisfied.

In this case, the second lock of the IC card function of the wearable device 102 is unlocked, and the user can use the IC card function of the wearable device 102.

### (Step S105)

Step S105 is a process to be performed in a case where the control section that executes the IC card function locking process and lock unlocking process of the wearable device 102 has decided that the second-lock unlocking condition set at Step S102 is not satisfied.

In this case, the second lock of the IC card function of the wearable device 102 remains locked without being unlocked. In this case, the user cannot use the IC card function of the wearable device 102.

In this manner, the information processing apparatus of the present disclosure, that is, the information processing apparatus such as a smartphone or a wearable device on which an IC card function execution application is installed, executes the IC card function lock control by deciding whether or not a user-set condition is satisfied in accordance with acquisition information of applications or sensors in the information processing apparatus.

### [3. About Example of Condition Setting of Second Lock that can be Set by User and Specific Example of Lock Control Process]

Next, an example of condition setting of the second lock that can be set by a user, and a specific example of a lock control process are explained.

FIG. 5 is a diagram depicting a flowchart for explaining the example of the condition setting of the second lock for the information processing apparatus of the present disclosure, that is, the information processing apparatus such as a smartphone or a wearable device having IC card functions, and a lock control process sequence according to the setting.

The table depicted on the left side in FIG. 5 depicts each of the following pieces of data.
(a) Locking target application (IC card function providing application)
(b) Lock (second-lock) unlocking decision application
(c) Lock (second-lock) unlocking condition

(a) Locking target application (IC card function providing application) is an application to be a lock setting and an unlocking target in the present embodiment.

In many cases, a large number of applications that provide IC card functions such as those that enable payment processes are installed on and can be used with the information processing apparatus such as a smartphone or a wearable device having IC card functions.

For example, those applications include: a transportation riding function providing application that can be used as tickets for trains, buses, and the like; a credit card function providing application having a credit card function that can be used at various stores; a shop-specific application that can be used at a particular restaurant chain and can be used for payments specific to particular stores; and the like.

In the configuration of the present disclosure, an IC card function providing application to be a locking target can be specified, and lock control of the IC card function providing application can be performed.

Furthermore, in a case where a plurality of different services (e.g., a train ticket function providing service, a shopping payment function service, etc.) is set such that they can be used by using one IC card function providing application, it is also possible to perform lock control for each service.

The example depicted in FIG. 5 is a setting example for (a) Locking target application (IC card function providing application) = transportation ticket function providing application.

(b) Lock (second-lock) unlocking decision application is an application for acquiring information that can be used for lock setting and unlocking decision of (a) Locking target application (IC card function providing application) = transportation ticket function providing application described above.

(c) Lock (second-lock) unlocking condition is information to be a lock (second-lock) unlocking condition acquired from the lock (second-lock) unlocking decision application described above.

In the example depicted in FIG. 5,
(b) Lock (second-lock) unlocking decision application = step counting application, and
(c) Lock (second-lock) unlocking condition = step count of the day > 10,000.

Each piece of information of (a) to (c) can be set freely by a user. For example, in the sequence explained with reference to FIG. 3 earlier, they can be set at Step S102.

Specific lock control based on the lock unlocking condition setting depicted in FIG. 5 is performed in the following manner.

The user goes out wearing a wearable device having an IC card function (transportation ticket function providing application) and the step counting application.

In a case where the step count of the user of the day has not exceeded 10,000, the second lock of the IC card function (transportation ticket function providing application) remains locked and thus cannot be used. That is, it is not possible to pass through a ticket gate by using the IC card function (transportation ticket function providing application) and to get on a train.

In a case where the step count of the user of the day has exceeded 10,000, the second lock of the IC card function (transportation ticket function providing application) is unlocked. This unlocking of the second lock allows the user to pass through a ticket gate by using the IC card function (transportation ticket function providing application) and to get on a train.

For example, such use becomes possible.

The flowchart depicted on the right side in FIG. 5 is a flowchart for explaining a lock unlocking sequence. Note that it is assumed that the user is holding the information processing apparatus such as a wearable device in which double locks including a first lock based on a lock unlocking code and a second lock based on a user setting condition are set.

A process at each step is explained.

### (Step S121)

First, at Step S121, the user inputs a lock unlocking code to the information processing apparatus. That is, a lock unlocking code such as a PIN code is input.

### (Step S122)

The control section of the information processing apparatus collates the lock unlocking code input by the user and a code registered on the memory and decides whether or not they match.

In a case where they match, it is decided that the correct code has been input, and the process proceeds to Step S123.

In a case where they do not match, it is decided that the correct code has not been input, and the process returns to Step S121. In this case, unlocking of the first lock is not performed, and the IC card function cannot be used.

### (Step S123)

In a case where it is decided that the correct code has been input at Step S122, the process proceeds to Step S123.

In this case, the control section of the information processing apparatus unlocks the first lock of the IC card function.

Note that the IC card function cannot be used yet in this state.

### (Step S124)

Next, the control section of the information processing apparatus decides whether or not the user-set second-lock unlocking condition is satisfied.

The condition information depicted on the left side in FIG. 5 is stored on a storage section of the information processing apparatus. By referring to the second-lock unlocking condition stored on the storage section of the information processing apparatus and furthermore analyzing acquisition information of the second-lock unlocking decision application = the step counting application, the control section of the information processing apparatus decides whether or not the user-set second-lock unlocking condition is satisfied.

In a case where it is decided that the second-lock unlocking condition is satisfied, that is, in a case where it is decided that the step count of the user has exceeded 10,000 in the present example, the process proceeds to Step S125.

On the other hand, in a case where it is decided that the second-lock unlocking condition is not satisfied, that is, in a case where it is decided that the step count of the user has not exceeded 10,000, the process returns to Step S123. In this case, the second lock is not unlocked, and the user cannot use the IC card function (transportation ticket function providing application).

### (Step S125)

In a case where it is decided that the second-lock unlocking condition is satisfied at Step S124, that is, in a case where it is decided that the step count of the user has exceeded 10,000, the process proceeds to Step S125.

In a case where it is decided that the second-lock unlocking condition is satisfied, the control section of the information processing apparatus unlocks the second lock at Step S125. As a result of this process, it becomes possible for the user to use the IC card function (transportation ticket function providing application).

Note that while, in the setting in the embodiment mentioned above, the step counting application counts a step count of the user of the day, it is also possible to set the starting point of the counting of the step count to a certain time like 8 a.m. or 1 p.m., for example. In this case, step counting by the step counting application is started on the basis of time measurement information of a clock of the information processing apparatus. This starting point condition can also be set and stored on the storage section by the user.

The process example explained with reference to FIG. 5 is a process example according to the following setting.
(a) Locking target application (IC card function providing application) = transportation ticket function providing application
(b) Lock (second-lock) unlocking decision application = step counting application
(c) Lock (second-lock) unlocking condition = step count of the day > 10,000

In the information processing apparatus of the present disclosure, it is also possible that the setting of the second lock is setting which is a combination of acquisition information of a plurality of applications.

An example of a process of controlling the second lock on the basis of acquisition information of two applications is explained with reference to FIG. 6.

FIG. 6 depicts an example in which the step counting application and a weather information application are used as lock (second-lock) unlocking decision applications. That is, the following is set in this example.
(a) Locking target application (IC card function providing application) = transportation ticket function providing application
(b1) Lock (second-lock) unlocking decision application = step counting application
(b2) Lock (second-lock) unlocking decision application = weather information application
(c) Lock (second-lock) unlocking condition

In a case of the weather ≠ rain, the step count of the day > 10,000.

In a case of the weather = rain, there are no restrictions regarding the step count.

That is, in a case where the weather is not rain, the second lock is not unlocked unless the step count of the user of the day exceeds 10,000, but in a case where the weather is rain, the second lock is unlocked also in a case where the step count of the user of the day has not exceeded 10,000. As a result, in a case where the weather is rain, the user can get on a train by using the IC card function, that is, the transportation ticket function providing application, without having to walk.

In this manner, the information processing apparatus of the present disclosure allows finer setting of the IC card function lock control by using acquisition information of a plurality of applications.

### [4. About Process Example of IC Card Function Lock Control of Smartphone]

While in the example explained with reference to FIG. 3 and FIG. 4 explained earlier, the IC card function lock setting and unlocking of the wearable device 102 are performed, processes of the present disclosure can also be used as processes for IC card function lock control of a smartphone itself.

A sequence of the IC card function lock control of the smartphone 101 is explained with reference to FIG. 7 and FIG. 8.

The IC card function locking process and unlocking process of the smartphone are executed in accordance with a procedure of Steps S141 to S145 depicted in FIG. 7 to FIG. 8. A process at each step is explained.

### (Step S141)

First, at Step S141, by using the setting screen of the IC card function providing application of the smartphone 101, a lock unlocking code (PIN code) is input to the smartphone 101 and stored on a memory of the smartphone 101.

### (Step S142)

Next, at Step S142, by using the setting screen of the IC card function providing application of the smartphone 101,
"lock unlocking condition (second-lock unlocking condition)"
is input to the smartphone 101 and stored on the memory of the smartphone 101.

### (Step S143)

Next, at Step S143, the user inputs a lock unlocking code to the smartphone 101 and unlocks the first lock of the IC card function installed on the smartphone 101.

However, it should be noted that even if the first lock is unlocked, it is not necessarily possible to use the IC card function of the smartphone 101.

It becomes possible to use the IC card function of the smartphone 101 only after the second-lock unlocking condition set at Step S142 is satisfied.

Specifically, the IC card function of the smartphone 101 can be used in the state of Step S144 depicted in FIG. 8.

### (Step S144)

Step S144 is a process to be performed in a case where the control section that executes the IC card function locking and unlocking of the smartphone 101 has decided that the second-lock unlocking condition set at Step S142 is satisfied.

In this case, the second lock of the IC card function of the smartphone 101 is unlocked, and the user can use the IC card function of the smartphone 101.

### (Step S145)

Step S145 is a process to be performed in a case where the control section that executes the IC card function locking and unlocking of the smartphone 101 has decided that the second-lock unlocking condition set at Step S142 is not satisfied.

In this case, the second lock of the IC card function of the smartphone 101 remains locked without being unlocked. In this case, the user cannot use the IC card function of the smartphone 101.

In this manner, the information processing apparatus of the present disclosure, that is, the information processing apparatus such as a smartphone or a wearable device on which an IC card function execution application is installed, executes the IC card function lock control by deciding whether or not a user-set condition is satisfied in accordance with acquisition information of applications or sensors in the information processing apparatus.

Note that, in the case of the smartphone, unlike the wearable device, the user does not wear the device (smartphone), and there is a possibility that another user holds the smartphone on her/his hand after the first lock is unlocked. Accordingly, there is a difference that the state in which the first lock is unlocked does not continue unlike the case of the wearable device, and the state continues only until the screen of the smartphone is turned off or enters the stand-by state after the first lock is unlocked.

Accordingly, in the case of the smartphone, the smartphone may be set such that the user inputs the PIN code immediately before holding the smartphone over to a reader/writer (R/W), the first lock is unlocked, and, in a case where the second-lock unlocking condition is satisfied at that time point, the second lock is unlocked to enable use of the IC card function.

### [5. About Specific Examples of IC Card Function Providing Applications to be Locking Targets]

Next, specific examples of IC card function providing applications to be locking targets in processes of the present disclosure are explained.

As depicted in FIG. 9, in an information processing apparatus (user terminal) 100 of the present disclosure such as the smartphone 101 or the wearable device 102, various applications that provide IC card functions are set such that they can be used.

As depicted in FIG. 9, separate applications for using IC card functions of a transportation IC card, IC cards as credit cards of various credit companies, and IC cards that can be used in shopping at shopping centers, for example, are installed and can be used.

The IC card function providing applications to be lock control targets mentioned above can be selected and specified from the plurality of applications. In addition, in a case where one application includes a plurality of different services, setting for each service is also possible.

Specific lock control targets can be specified by specifying system codes, card IDs, service IDs, or the like, for example.

Note that, in a case where lock control targets are not specified, the whole of IC card function providing applications that can be used with the apparatus is set as control targets.

A specific example of the lock control executed by the information processing apparatus of the present disclosure is explained with reference to FIG. 10 and FIG. 11.

FIG. 10 depicts a flowchart for explaining the example of the condition setting of the second lock for the information processing apparatus of the present disclosure, that is, the information processing apparatus such as a smartphone or a wearable device having IC card functions, and a lock control process sequence according to the setting.

The table depicted on the left side in FIG. 10 depicts each of the following pieces of data.
(a) Locking target application (IC card function providing application) = electronic money function providing application
(b) Lock (second-lock) unlocking decision application = map application (location information providing application)
(c) Lock (second-lock) unlocking condition = user location is in a specified area

The second-lock unlocking condition in this setting is that the user location acquired on the basis of the map application (location information providing application) is in a prespecified area.

In a case where the condition is satisfied, it becomes possible to use the electronic money function providing application, which is a locking target application (IC card function providing application).

This setting information is stored on the storage section in the information processing apparatus, and the control section executes an unlocking or locking process by comparing the setting information stored on the storage section and acquisition information of the lock (second-lock) unlocking decision application = the map application (location information providing application) and deciding whether or not the lock unlocking condition is satisfied.

This process example is a process example in which it is supposed that, for example, a child wears a wearable device having an electronic money function and goes out alone. Her/his parent wants to prevent the child from using electronic money as she/he likes. The parent permits use of electronic money at her/his school, but does not permit use of electronic money at a convenience store, a supermarket, a vending machine outside the school, and the like.

Alternatively, for example, the parent permits use of electronic money at ticket gates of stations closest to the house and the school, but does not want the child to use electronic money at locations other than them.

This is a process example that can be used in such cases.

Before handing the wearable device to the child, the parent uses a smartphone application to set locations where the child is allowed to use electronic money that can be used with the wearable device.

The child wears the wearable device and unlocks the first lock of the wearable device. That is, the child performs the first-lock unlocking process based on code input. When the wearable device enters an area that is set in advance as an area where use of electronic money is permitted while the wearable device stays in that state, the second lock is unlocked, and it becomes possible to use the electronic money function.

Note that, even if the wearable device is brought into an area where use of electronic money is permitted while the first lock remains locked, electronic money cannot be used.

In addition, even in a state that the first lock is unlocked, it is not possible to use electronic money until the second lock is unlocked.

The flowchart depicted on the right side in FIG. 10 is a flowchart for explaining a lock unlocking sequence. Note that it is assumed that the user is holding the information processing apparatus such as a wearable device in which double locks including a first lock based on a lock unlocking code and a second lock based on a user setting condition are set.

A process at each step is explained.

### (Step S201)

First, at Step S201, the user inputs a lock unlocking code to the information processing apparatus. That is, a lock unlocking code such as a PIN code is input.

### (Step S202)

The control section of the information processing apparatus collates the lock unlocking code input by the user, and a code registered on the memory and decides whether or not they match.

In a case where they match, it is decided that the correct code has been input, and the process proceeds to Step S203.

In a case where they do not match, it is decided that the correct code has not been input, and the process returns to Step S201. In this case, unlocking of the first lock is not performed, and the IC card function cannot be used.

### (Step S203)

In a case where it is decided that the correct code has been input at Step S202, the process proceeds to Step S203.

In this case, the control section of the information processing apparatus unlocks the first lock of the IC card function.

Note that the IC card function cannot be used yet in this state.

### (Step S204)

Next, the control section of the information processing apparatus decides whether or not the user-set second-lock unlocking condition is satisfied.

The condition information depicted on the left side in FIG. 10 is stored on the storage section of the information processing apparatus. By referring to the second-lock unlocking condition stored on the storage section of the information processing apparatus and furthermore analyzing acquisition information of the second-lock unlocking decision application = the step counting application, the control section of the information processing apparatus decides whether or not the user-set second-lock unlocking condition is satisfied.

In a case where it is decided that the second-lock unlocking condition is satisfied, that is, in a case where it is decided that the user location is in a specified area in the present example, the process proceeds to Step S205.

On the other hand, in a case where it is decided that the second-lock unlocking condition is not satisfied, that is, in a case where it is decided that the user location is not in the specified area, the process returns to Step S203. In this case, the second lock is not unlocked, and the user cannot use the IC card function (electronic money function providing application).

### (Step S205)

In a case where it is decided that the second-lock unlocking condition is satisfied at Step S204, that is, in a case where it is decided that the user location is in the specified area, the process proceeds to Step S205.

In a case where it is decided that the second-lock unlocking condition is satisfied, the control section of the information processing apparatus unlocks the second lock at Step S205. As a result of this process, it becomes possible for the user to use the IC card function (electronic money function providing application).

FIG. 11 depicts still another specific example.

The table depicted on the left side in FIG. 11 depicts each of the following pieces of data.
(a) Locking target application (IC card function providing application) = car sharing membership card function application
(b) Lock (second-lock) unlocking decision application = physical condition management application
(c) Lock (second-lock) unlocking condition = user physical condition is good

The second-lock unlocking condition in this setting is that user physical condition information acquired by the physical condition management application represents that the physical condition of the user is good.

In a case where this condition is satisfied, it becomes possible to use the locking target application (car sharing membership card function application).

This setting information is stored on the storage section in the information processing apparatus, and the control section executes an unlocking or locking process by comparing the setting information stored on the storage section and acquisition information of the lock (second-lock) unlocking decision application = the physical condition management application and deciding whether or not the lock unlocking condition is satisfied.

This process example is an example of a process to be performed in a case where, for example, an IC card function providing application including car sharing membership card information is installed and used on an information processing apparatus such as a smartphone or a wearable device of a user.

The user can acquire a key to a car to be used, by holding the smartphone or the wearable device over to an IC card reader of the car. That is, it is possible to rent the car without human intervention.

In conventional mechanisms, regardless of the physical condition of a driver, it is possible to rent and drive a car to be used by applying for car sharing and going to the location of the car with a membership card.

However, in a case where the driver is suffering from shortage of sleep or a poor physical condition, or is extremely stressed, it is highly likely that the driver causes an accident if she/he drives the car. It is desirable if it is possible to prevent the car from being rented in a case where the driver is in a poor physical condition which is not suited for driving.

The physical condition management application is installed on the smartphone or the wearable device used by the user, and furthermore, various centers are mounted on the smartphone or the wearable device. The physical condition management application measures the heart rate, amount of activity, sleep, stress level, and the like of the user via the sensors.

Furthermore, on the basis of the information, the physical condition management application decides whether or not the physical condition of the user is in a good state.

In a case where it is decided that the physical condition of the user is good, the second lock is unlocked. Thereby, it becomes possible to use the IC card function providing application as a locking target application, that is, the car sharing membership card function application and to rent a car.

However, in a case where it is decided that the physical condition of the user is not good, the second lock is not unlocked. That is, it is not possible to use the car sharing membership card function application and to rent the car.

By performing such lock control, it becomes possible to prevent driving of a car by a user in a poor physical condition, and to prevent an accident before it happens.

For example, the user wears the wearable device and unlocks the first lock. Thereafter, the user keeps wearing the wearable device until immediately before using car sharing, and the physical condition management application keeps recording vital data such as the heart rate, body temperature, or amount of activity of the user.

The physical condition management application of the wearable device analyzes the vital data of the user and decides the sleep state or stress level of the user, and whether or not the user is under the influence of alcohol.

In a case where it is decided that the physical condition of the user is good, the second lock is unlocked. Thereby, it becomes possible to use the IC card function providing application as a locking target application, that is, the car sharing membership card function application and to rent a car.

Note that, while the unlocking of the first level lock may be performed on the basis of input of a lock unlocking code (PIN code), if only the code input is used, there can be a case where bioinformation (vital data) recorded on a memory of a wearable device differs from data of the main user in a case where the device is borrowed and lent between family members, for example. In order to avoid such a situation, in one possible configuration, for example, gait authentication by using an acceleration sensor mounted on the wearable device, that is, an authentication process of identifying an individual on the basis of a manner of walking, may be performed in parallel. With this configuration, it is possible to decide whether or not a wearer of the device when data is recorded is a user herself/himself.

That is, regardless of the locked state, the wearable device records a pattern of the manner of walking of the user (gait data) in addition to information regarding the physical condition while the user wears the wearable device. Also at the time point when a user inputs a lock unlocking code and attempts to unlock the first lock, in order to confirm that the same user is attempting to unlock the first lock, the wearable device compares gait data of the latest period which is the closest to the current time point and gait data of a predetermined past period. In a case where it is confirmed that patterns of the gait data match, the wearable device decides that the current user is the user herself/himself and accepts input of the lock unlocking code. That is, if the code is correct, a process of unlocking the lock is performed.

The flowchart depicted on the right side in FIG. 11 is a flowchart for explaining a lock unlocking sequence. Note that it is assumed that the user is holding the information processing apparatus such as a wearable device in which double locks including a first lock that uses a lock unlocking code and a second lock based on a user setting condition are set.

A process at each step is explained.

### (Step S221)

First, at Step S221, the user inputs a lock unlocking code to the information processing apparatus. That is, a lock unlocking code such as a PIN code is input.

### (Step S222)

The control section of the information processing apparatus collates the lock unlocking code input by the user and a code registered on the memory and decides whether or not they match.

In a case where they match, it is decided that the correct code has been input, and the process proceeds to Step S223.

In a case where they do not match, it is decided that the correct code has not been input, and the process returns to Step S221. In this case, unlocking of the first lock is not performed, and the IC card function cannot be used.

### (Step S223)

In a case where it is decided that the correct code has been input at Step S222, the process proceeds to Step S223.

In this case, the control section of the information processing apparatus unlocks the first lock of the IC card function.

Note that the IC card function cannot be used yet in this state.

Note that, in this first lock unlocking process at Steps S221 to S222, as mentioned before, an authentication method that enables confirmation as to whether the current user is the user herself/himself and can authenticate individuals may be used. It is possible to use the individual authentication process mentioned before on the basis of a manner of walking by using an acceleration sensor.

Note that, for example, in the configuration as mentioned before in which, regardless of the locked state, the wearable device records a pattern of the manner of walking of the user (gait data) in addition to information regarding the physical condition while the user wears the wearable device, it becomes possible to execute a process like the one mentioned below.

The latest gait data at the time point when a user is inputting a lock unlocking code and attempting to unlock the first lock and gait data of a predetermined past period are compared, and in a case where patterns of the gait data match, it is decided that the current user is the user herself/himself, and input of the lock unlocking code is accepted. That is, if the code is correct, a process of unlocking the first lock is performed.

### (Step S224)

Next, the control section of the information processing apparatus decides whether or not the user-set second-lock unlocking condition is satisfied.

The information depicted on the left side in FIG. 11 is stored on the storage section of the information processing apparatus. By referring to the second-lock unlocking condition stored on the storage section of the information processing apparatus and furthermore analyzing acquisition information of the second-lock unlocking decision application = the physical condition management application, the control section of the information processing apparatus decides whether or not the user-set second-lock unlocking condition is satisfied.

In a case where it is decided that the second-lock unlocking condition is satisfied, that is, in a case where it is decided that the physical condition of the user is good in the present example, the process proceeds to Step S225.

On the other hand, in a case where it is decided that the second-lock unlocking condition is not satisfied, that is, in a case where it is decided that the physical condition of the user is not good, the process returns to Step S223. In this case, the second lock is not unlocked, and the user cannot use the IC card function (car sharing membership card function application).

### (Step S225)

In a case where it is decided that the second-lock unlocking condition is satisfied at Step S224, that is, in a case where it is decided that the physical condition of the user is good, the process proceeds to Step S225.

In a case where it is decided that the second-lock unlocking condition is satisfied, the control section of the information processing apparatus unlocks the second lock at Step S225. As a result of this process, it becomes possible for the user to use the IC card function (car sharing membership card function application).

Note that, while in the process example mentioned above, it is supposed that a decision of unlocking is made by checking a body temperature or a pulse at the time point of use, the user may always wear the wearable device on her/his body, and sleep time within the past 24 hours and the like may be used for conditional decisions.

In this case, a process is executed in a flow in which the user operates the wearable device and unlocks the first lock immediately before using car sharing, and if a condition that needs to be satisfied for unlocking the second lock is satisfied at that time point, the second lock is unlocked, and it becomes possible to rent a car.

### [6. About Configuration Example of Information Processing Apparatus]

Next, a configuration example of the information processing apparatus 100 of the present disclosure is explained.

FIG. 12 is a diagram depicting the configuration example of the information processing apparatus 100 of the present disclosure, that is, the information processing apparatus 100 such as a smartphone or a wearable device having IC card functions. As depicted in FIG. 12, the information processing apparatus 100 of the present disclosure has a control section (microcomputer etc.) 151, an operation section 152, a display section 153, a secure element 154, a memory 155, a clock 156, a group of various types of sensor 160, a first communication section 170, a second communication section 180, and a power supply section 190.

The group of various types of sensor 160 includes an acceleration sensor 161, a fingerprint sensor 162, a GPS sensor 163, and the like, for example. The first communication section 170 includes a Bluetooth (registered trademark) communication section 171, a Wi-Fi communication section 172, and other communication sections 173. The second communication section 180 includes an NFC-CLF 181, proximity communication means 182, and other communication sections 183.

The control section (microcomputer etc.) 151 executes control of processes to be executed at the information processing apparatus 100. Specifically, the control section (microcomputer etc.) 151 performs execution, control, and the like of setting and unlocking processes of the first lock and the second lock that are explained earlier, and others like various types of application. The control section (microcomputer etc.) 151 also performs process control of each flow mentioned above.

Note that control programs, applications, and the like to be executed by the control section (microcomputer etc.) 151 are stored on the memory 155.

The operation section 152 is an operation section that can be operated by a user, and, in addition to various types of switch, also includes a touch panel and the like on the display section 153. The user can input various types of information via the operation section 152. For example, the user can input code information for unlocking the first lock, application information, unlocking condition information, and the like to be applied to the second-lock unlocking, which are explained earlier.

The display section 153 is a display section such as a liquid crystal display, for example, and, in addition to being used for input of the locking condition information mentioned above, is used for displaying execution information and the like of various applications.

The secure element 154 is an IC chip configured as an element having a secure memory and a memory control section. IC card function providing applications and the like are stored on the secure memory in the secure element 154.

A specific configuration example of the secure element 154 is explained with reference to FIG. 13 in the following paragraphs.

The control programs to be executed by the control section 151, applications, the lock unlocking code (PIN code), the second-lock unlocking condition information, and the like are recorded on the memory 155, as mentioned before.

The clock 156 is clock information, and outputs clock information to each processing section. The group of various types of sensor 160 includes the acceleration sensor 161, the fingerprint sensor 162, the GPS sensor 163, and the like, for example. Information acquired by these sensors is used for a process of deciding whether or not the second-lock unlocking condition is satisfied, for example.

The first communication section 170 includes the Bluetooth (registered trademark) communication section 171, the Wi-Fi communication section 172, and the other communication sections 173, and is used for communication with external apparatuses such as a server, a PC, a smartphone, a wearable device, and the like. The second communication section 180 includes the NFC-CLF 181, the proximity communication means 182, and the other communication sections 183, and performs a process of communication with the reader/writer (R/W) 21, for example.

The NFC-CLF 181 is an NFC (Near Field Communication)-CLF (Contactless Front End) and is one type of IC chip for proximity communication.

Next, a specific configuration example of the secure element 154 is explained with reference to FIG. 13.

The secure element 154 is an IC chip mainly including the secure memory and the secure memory control section.

As depicted in FIG. 13, each IC card function providing application is stored on the secure memory of the secure element 154. A card OS executes process control of each service of IC card function providing applications stored on the secure memory.

Note that use of the IC card function providing applications stored on the secure element 154 is enabled in a case where the control section 151 unlocks the locks (the first lock and the second lock).

In a case where the control section 151 unlocks the locks (the first lock and the second lock), control of the card OS which is a control section in the secure element 154 executes communication with the reader/writer (R/W) via, for example, the NFC-CLF of the communication section 180.

Next, one example of a state transition process of an IC card function providing application stored on the information processing apparatus 100 of the present disclosure is explained with reference to FIG. 14.

As depicted in FIG. 14, the state of each IC card function providing application stored on the information processing apparatus 100 is set to any of the following four states and transitions between the states on the basis of occurrences of transition conditions.
(State 1) First-lock locked state
(State 2) First-lock unlocked state
(State 3) Second-lock locked state
(State 4) Second-lock unlocked state

The transition from (State 1) First-lock locked state to (State 2) First-lock unlocked state occurs when a first lock unlocking code is input (user authentication).

The transition from (State 2) First-lock unlocked state to (State 1) First-lock locked state occurs in a case where a prespecified first-lock setting condition is satisfied. For example, the transition occurs in a case where the wearable terminal is removed, and then a certain length of time has elapsed while the wearable device is left stationary, in a case where it is decided, on the basis of sensing information of a vein sensor, that the wearable device is no longer worn on a human body, in a case where the IC card function providing application has not been used for a prespecified length of time, or in other cases.

The transition from (State 2) First-lock unlocked state to (State 3) Second-lock locked state occurs in a case where a second-lock unlocking condition has been set and the second-lock unlocking condition is not satisfied.

The transition from (State 3) Second-lock locked state to (State 2) First-lock unlocked state occurs in a case where a process of deleting the second-lock unlocking condition is performed.

The transition from (State 3) Second-lock locked state to (State 1) First-lock locked state occurs in a case where the prespecified first-lock setting condition is satisfied. For example, the transition occurs in a case where the wearable terminal is removed, and then a certain length of time has elapsed while the wearable device is left stationary, in a case where it is decided, on the basis of sensing information of a vein sensor, that the wearable device is no longer worn on a human body, in a case where the IC card function providing application has not been used for a prespecified length of time, or in other cases.

The transition from (State 3) Second-lock locked state to (State 4) Second-lock unlocked state occurs in a case where the second-lock unlocking condition is satisfied.

The transition from (State 4) Second-lock unlocked state to (State 3) Second-lock locked state occurs in a case where the second-lock unlocking condition is no longer satisfied.

The transition from (State 4) Second-lock unlocked state to (State 1) First-lock locked state occurs in a case where the prespecified first-lock setting condition is satisfied. For example, the transition occurs in a case where the wearable terminal is removed, and then a certain length of time has elapsed while the wearable device is left stationary, in a case where it is decided, on the basis of sensing information of a vein sensor, that the wearable device is no longer worn on a human body, in a case where the IC card function providing application has not been used for a prespecified length of time, or in other cases.

In addition, the transition from the other states to (State 1) First-lock locked state occurs also in a case where a length of time which is prespecified as a specification or the like of the wearable device has elapsed while the user wears the wearable device (irrespective of whether or not the IC card function providing application is being used).

The IC card function providing application stored on the information processing apparatus 100 of the present disclosure makes the state transition depicted in FIG. 14 in this manner.

Next, a data example of the second-lock unlocking condition information stored on the memory 155 of the information processing apparatus 100 is explained with reference to FIG. 15. Each of the following pieces of data is recorded in association with each other on the memory 155 as depicted in FIG. 15.
(A) Rule identifiers
(B) Locking target services (services of IC card function providing applications)
(C1) Second-lock unlocking conditions 1
(C2) Second-lock unlocking conditions 2

(A) Rule identifiers are identifiers of applicable rules. A user can select a rule to be applied from a plurality of the rules.

In addition, it is also possible to perform a process of adding various new rules and a process of deleting rules.

(B) Locking target services (services of IC card function providing applications) are provided services of applications to be second-lock setting and unlocking targets.

For example, a rule is recorded for each application providing service of: a transportation riding function providing application that can be used as tickets for trains, buses, and the like; a credit card function providing application having a credit card function that can be used at various stores; a shop-specific application that can be used at a particular restaurant chain and can be used for payments specific to particular stores; and the like.

A plurality of second-lock unlocking conditions can be recorded in (C1), (C2), ...

The second-lock unlocking conditions 1, 2, ... are AND conditions, and second locks of (B) Locking target services (services of IC card function providing applications) are unlocked, and use of them is enabled in a case where all of unlocking conditions recorded as (C1), (C2), ... are satisfied.

Note that each of the following pieces of data is recorded as (C1) Second-lock unlocking conditions 1.
(C1a) Second-lock unlocking decision applications or sensors
(C1b) Unlocking condition values 1
(C1c) Unlocking condition values 2

Applications or sensors for acquiring information to be applied to second-lock unlocking decisions are recorded as (C1a) Second-lock unlocking decision applications or sensors.
(C1b) Unlocking condition values 1
(C1c) Unlocking condition values 2

As these values, values which are information acquired by (C1a) Second-lock unlocking decision applications or sensors and are used as second-lock unlocking conditions of (B) Locking target services (services of IC card function providing applications) are recorded.

For example, as Rule 1, data including
(B) Locking target service (service of IC card function providing application) = xxxx,
(C1a) Second-lock unlocking decision applications or sensors = physical condition management application, pulse sensor, and body temperature sensor,
(C1b) Unlocking condition value 1 = (pulse = 60 to 90), and
(C1c) Unlocking condition value 2 = (body temperature 35°C to 37°C)
is recorded.

This is a rule corresponding to the second-lock unlocking process of the car-sharing membership card function service explained with reference to FIG. 11 earlier. That is, this corresponds to the setting rule of
(B) Locking target service (service of IC card function providing application) = xxxx
= car-sharing membership card function service.

Rule 1 is a rule under which the second lock of the service represented by (B) (xxxx = car-sharing membership card function service) is unlocked and use of the service is enabled in a case where the pulse and the body temperature of the user acquired by the physical condition management application, the pulse sensor and the body temperature sensor are 60 to 90 and 35°C to 37°C, respectively.

In addition, as Rule 2, data including
(B) Locking target service (service of IC card function providing application) = yyyy,
(C1a) Second-lock unlocking decision applications or sensors = step counting application, acceleration sensor,
(C1b) Unlocking condition value 1 = (step count > 10,0000),
(C2a) Second-lock unlocking decision application or sensor = system clock, and
(C2b) Unlocking condition value 1 = (current time = pp to qq) is recorded.

This is a rule similar to the second-lock unlocking process of the transportation ticket function providing service explained with reference to FIG. 5 earlier. That is, this corresponds to the setting rule of
(B) Locking target service (service of IC card function providing application) = yyyy
= transportation ticket function providing service.

Rule 2 is a rule under which the second lock of the service (yyyy = transportation ticket function providing service) represented by (B) is unlocked and use of the service is enabled in a case where the step count of the user acquired by the step counting application and the acceleration sensor is larger than 10,000, and the current time obtained by the system clock is pp to qq.

Note that, for example, in a case where it is desired to set a count start time of the step count of the user to a particular time such as 8 o'clock, the user is only required to set the unlocking condition value 1 of the system clock to a step count start time = 8:00 a.m. or the like.

In addition, as Rule 3, data including
(B) Locking target service (service of IC card function providing application) = yyyy,
(C1a) Second-lock unlocking decision applications or sensors = step counting application, acceleration sensor,
(C1b) Unlocking condition value 1 = (step count > 10,0000),
(C1a) Second-lock unlocking decision application or sensor = weather information application, and
(C1b) Unlocking condition value 1 = (weather = application) is recorded.

This is a rule related to the second-lock unlocking process of the transportation ticket function providing service which is the same as Rule 2 mentioned above. That is, this corresponds to the setting rule of
(B) Locking target service (service of IC card function providing application) = yyyy
= transportation ticket function providing service.

Rule 2 and Rule 3 are rules related to the same service, and the user can freely set which of them is applied.

Rule 3 is a rule similar to the second-lock unlocking process of the transportation ticket function providing service explained with reference to FIG. 6 earlier.

Rule 3 is a rule under which the second lock of the service (yyyy = transportation ticket function providing service) represented by (B) is unlocked and use of the service is enabled in a case where the step count of the user acquired by the step counting application and the acceleration sensor is larger than 10,000 or the weather obtained by the weather information application is rain.

Conditions that are recorded in the lateral direction of (C1), (C2) ... are AND conditions, but conditions that are recorded in the longitudinal direction in each data field of (C1) or the like are OR conditions.

Furthermore, as Rule 4, data including
(B) Locking target service (service of IC card function providing application) = zzzz,
(C1a) Second-lock unlocking decision application or sensor = GPS,
(C1b) Unlocking condition value 1 = (current location = latitude = aa to bb, longitude = cc to dd),
(C2a) Second-lock unlocking decision application or sensor = system clock, and
(C2b) Unlocking condition value 1 = (current time = uu to vv) is recorded.

This rule is an example rule under which the second-lock unlocking decision applications or sensors are only the GPS and the system clock and a lock unlocking decision is executed by using only acquisition information of sensors (including the clock) to which information acquisition applications are not applied.

The control section 151 of the information processing apparatus 100 performs a lock unlocking decision by using only sensor acquisition information in this manner in some cases.

Rule 4 is a rule under which the second lock of the service (zzzz) represented by (B) is unlocked and use of the service is enabled in a case where the current location of the user acquired by the GPS represents a location at the latitude of aa to bb and the longitude of cc to dd and the current time obtained by the system clock is uu to vv.

In this manner, each piece of data including
(A) Rule identifiers,
(B) Locking target services (services of IC card function providing applications),
(C1) Second-lock unlocking conditions 1,
(C2) Second-lock unlocking conditions 2
is recorded in association with each other as the second-lock unlocking condition information on the memory 155 of the information processing apparatus 100.

The control section 151 refers to the data to perform lock control of each service of IC card function providing applications.

Note that while, in the example depicted in FIG. 15, recorded data of (B) Locking target services (services of IC card function providing applications) is recorded for each service, it is also possible to record rules for each application including a plurality of services, and, in another possible configuration, rules can be set for each set of system codes that provide a plurality of applications or for each card ID or the like.

### [7. About Sequences of Processes Executed by Information Processing Apparatus]

Next, sequences of various processes executed by the information processing apparatus 100 of the present disclosure are explained.

Each of the following processes is explained with reference to a flowchart depicted in FIG. 16.
(1) Initial setting process of wearable device (FIG. 16)
(2) First-lock unlocking process of wearable device (FIG. 17)
(3) Second-lock unlocking condition setting process for wearable device (FIG. 18)
(4) First-lock and second-lock unlocking process of wearable device (FIG. 19)
(5) Second-lock unlocking condition deletion process of wearable device (FIG. 20)
(6) Lock unlocking process of wearable device based on command input from reader/writer (FIG. 21)

Note that each of these processes is executed under the control of the control section 151 including a CPU having a program executing function or the like in accordance with programs stored on the memory 155 of the information processing apparatus 100.

Hereinafter, the processes are explained sequentially.

### (1) Initial setting process of wearable device

First, a sequence of an initial setting process of the wearable device is explained with reference to a flowchart depicted in FIG. 16.

Processes at steps are explained sequentially.

### (Step S301)

First, at Step S301, communication connection is established between the smartphone 101 and the wearable device 102.

Note that, in this connection process, for example, a specified authentication process is executed, and mutual validity confirmation is performed, preferably.

### (Step S302)

Next, at Step S302, the smartphone 101 activates the IC card function setting application.

### (Step S303)

Next, at Step S303, the smartphone 101 inputs a lock unlocking code (PIN code) on a setting screen of the IC card function setting application and transmits the lock unlocking code to the wearable device 102.

### (Step S304)

Next, at Step S304, a user causes a setting screen of the IC card function providing application to be displayed on the wearable device 102 and inputs a lock unlocking code (PIN code).

### (Step S305)

Next, at Step S305, the control section of the wearable device 102 decides whether or not the code received from the smartphone 101, and the code input by the user to the wearable device 102 at Step S304 match. In a case where they match, the code is stored on the memory of the wearable device 102.

In a case where they do not match, the process returns to Step S303.

### (2) First-lock unlocking process of wearable device

Next, a sequence of a first-lock unlocking process of the wearable device is explained with reference to a flowchart depicted in FIG. 17.

Processes at steps are explained sequentially.

### (Step S321)

First, at Step S321, the user wears the wearable device 102.

### (Step S322)

Next, at Step S322, the setting screen of the IC card function providing application is displayed on the wearable device 102, and a lock unlocking code (PIN code) is input.

### (Step S323)

Next, at Step S323, the control section of the wearable device 102 decides whether or not the input code matches the code registered on the memory.

In a case where they do not match, the process returns to Step S322.

In a case where they match, the process proceeds to Step S324.

### (Step S324)

Next, at Step S324, the control section of the wearable device 102 unlocks a first lock.

### (Step S325)

Next, at Step S325, the control section of the wearable device 102 decides whether or not the wearable device 102 is no longer worn on a human body.

For example, this decision is made on the basis of a sensing value of an acceleration sensor, sensing information of a vein sensor, or the like.

In a case where the wearable device 102 is still worn on a human body, the process returns to Step S324, and the first-lock unlocked state is continued.

On the other hand, in a case where it is decided that the wearable device 102 is no longer worn on a human body, the process proceeds to Step S326.

### (Step S326)

At Step S325, in a case where the wearable device 102 is left stationary for a specified length of time or in a case where it is decided, on the basis of sensing information of a vein sensor, that the wearable device 102 is no longer worn on a human body, at Step S326, the control section of the wearable device 102 stops the first-lock unlocked state and triggers a transition to the first-lock locked state.

Note that the transition to the first-lock locked state occurs also in a case where a length of time which is prespecified as a specification or the like of the wearable device has elapsed while the user wears the wearable device (irrespective of whether or not the IC card function providing application is being used).

Thereafter, processes that are subsequent to Step S322 are executed in accordance with the code input by the user at Step S322.

### (3) Second-lock unlocking condition setting process for wearable device

Next, a sequence of a second-lock unlocking condition setting process for the wearable device is explained with reference to a flowchart depicted in FIG. 18.

Processes at steps are explained sequentially.

### (Step S341)

First, at Step S341, communication connection is established between the smartphone 101 and the wearable device 102.

Note that, in this connection process, for example, a specified authentication process is executed, and mutual validity confirmation is performed, preferably.

### (Step S342)

Next, at Step S342, the smartphone 101 activates the IC card function setting application.

### (Step S343)

Next, at Step S343, the user inputs a second-lock unlocking condition information to the smartphone 101. Specifically, the memory-registered data explained with reference to FIG. 15 earlier, that is, data including
(B) Locking target services (services of IC card function providing applications)
(C1a) Second-lock unlocking decision applications or sensors, and
(C1b) Unlocking condition values
is input.

### (Step S344)

Next, at Step S344, the smartphone 101 transmits, to the wearable device 102, the second-lock unlocking condition information input at Step S343.

### (Step S345)

Next, at Step S345, the wearable device 102 stores, on the memory of the wearable device 102, the second-lock unlocking condition information received from the smartphone 101.

### (4) First-lock and second-lock unlocking process of wearable device

Next, a sequence of a first-lock and second-lock unlocking process of the wearable device is explained with reference to a flowchart depicted in FIG. 19.

Processes at steps are explained sequentially.

### (Step S361)

First, at Step S361, the user wears the wearable device 102.

### (Step S362)

Next, at Step S362, the setting screen of the IC card function providing application is displayed on the wearable device 102, and a lock unlocking code (PIN code) is input.

### (Step S363)

Next, at Step S363, the control section of the wearable device 102 decides whether or not the input code matches the code registered on the memory.

In a case where they do not match, the process returns to Step S362.

In a case where they match, the process proceeds to Step S364.

### (Step S364)

Next, at Step S364, the control section of the wearable device 102 unlocks a first lock.

### (Steps S365 to S366)

Next, at Step S365, the control section of the wearable device 102 decides whether or not the wearable device 102 is no longer worn on a human body.

For example, this decision is made on the basis of a sensing value of an acceleration sensor, sensing information of a vein sensor, or the like.

In a case where the wearable device 102 is left stationary for a specified length of time or in a case where it is decided that the wearable device 102 is no longer worn on a human body on the basis of sensing information of a vein sensor, the process proceeds to Step S366, a transition to the first-lock locked state is triggered, and the process returns to Step S362.

Note that the transition to the first-lock locked state occurs also in a case where a length of time which is prespecified as a specification or the like of the wearable device has elapsed while the user wears the wearable device (irrespective of whether or not the IC card function providing application is being used).

On the other hand, in a case where the wearable device 102 has not been left stationary for the specified length of time, the process returns to Step S324, the first-lock unlocked state is continued, and the process proceeds to Step S371.

### (Step S371)

Next, at Step S371, the control section of the wearable device 102 decides whether or not a second-lock unlocking condition has been set, that is, whether or not there is a set rule to be applied to the IC card function applying application.

In a case where there are no such rules, the process proceeds to Step S374, and use of the execution service of the IC card function applying application is enabled.

On the other hand, in a case where there is an applicable rule, the process proceeds to Step S372.

### (Step S372)

Next, at Step S372, the control section of the wearable device 102 decides whether or not the second-lock unlocking condition is satisfied.

In this decision process, it is decided whether or not the unlocking condition is satisfied by referring to the setting information of the rules recorded on the memory, that is, the following information explained earlier with reference to FIG. 15 including
(B) Locking target services (services of IC card function providing applications),
(C1a) Second-lock unlocking decision applications or sensors, and
(C1b) Unlocking condition values
and comparing it with acquisition information of the applications or sensors.

In a case where it is decided that the second-lock unlocking condition is not satisfied, the decision process at Step S372 is executed continuously without unlocking the second lock.

On the other hand, in a case where it is decided that the second-lock unlocking condition is satisfied, the process proceeds to Step S373.

### (Step S373)

In a case where it is decided that the second-lock unlocking condition is satisfied at Step S372, the control section of the wearable device 102 executes the second-lock unlocking process at Step S373.

As a result, the process proceeds to Step S374, and use of the execution service of the IC card function applying application is enabled.

### (5) Second-lock unlocking condition deletion process of wearable device

Next, a sequence of a second-lock unlocking condition deletion process of the wearable device is explained with reference to a flowchart depicted in FIG. 20.

Processes at steps are explained sequentially.

### (Step S381)

First, at Step S381, communication connection is established between the smartphone 101 and the wearable device 102.

Note that, in this connection process, for example, a specified authentication process is executed, and mutual validity confirmation is performed, preferably.

### (Step S382)

Next, at Step S382, the smartphone 101 activates the IC card function setting application.

### (Step S383)

Next, at Step S383, the user selects, on the smartphone 101, a rule to be deleted from a list of the second-lock unlocking condition information read out from the memory of the wearable device 102.

### (Step S384)

Next, at Step S384, by remote operation from the smartphone 101, the control section of the smartphone 101 deletes the deletion target rule stored on the memory of the wearable device 102.

### (6) Lock unlocking process of wearable device based on command input from reader/writer

Next, a sequence of a lock unlocking process of the wearable device based on command input from a reader/writer is explained with reference to a flowchart depicted in FIG. 21.

Processes at steps are explained sequentially.

### (Step S391)

First, at Step S391, the reader/writer waits in a card-waiting state. In this period, the reader/writer is executing a constant polling process (command transmission to a card).

### (Step S392)

Next, at Step S392, the wearable device 102 receives a polling message from the reader/writer.

### (Step S393)

Next, at Step S393, according to the reception of the polling message from the reader/writer, the control section of the wearable device 102 checks a lock unlocking condition corresponding to a service of the IC card providing application requested by the reader/writer. Note that the check target lock unlocking condition is the second-lock unlocking condition. It is assumed that the first lock has been unlocked.

### (Step S394)

Next, at Step S394, it is decided whether or not the lock unlocking condition corresponding to the service of the IC card providing application requested by the reader/writer is satisfied.

In a case where the lock unlocking condition is not satisfied, the process ends without execution of subsequent processes as a response to the reader/writer.

On the other hand, in a case where it is decided that the lock unlocking condition corresponding to the service of the IC card providing application requested by the reader/writer is satisfied, the process proceeds to Step S395.

### (Step S395)

Next, at Step S395, the control section of the wearable device 102 unlocks the second lock corresponding to the service of the IC card providing application requested by the reader/writer.

### (Step S396)

Next, at Step S396, the control section of the wearable device 102 transmits, to the reader/writer, a response to the polling message.

### [8. About Other Embodiments]

Next, other embodiments are explained.

The following two embodiments are explained.
(1) Embodiment in which second-lock unlocking condition is use fee of particular IC card service of wearable device in certain length of time
(2) Embodiment in which lock unlocking condition is written on wearable device from reader/writer (R/W) when wearable device is held over to reader/writer (R/W)
(3) About other second-lock unlocking decision applications

### (1) Embodiment in which second-lock unlocking condition is use fee of particular IC card service of wearable device in certain length of time

First, an embodiment in which the second-lock unlocking condition is the use fee of a particular IC card service of the wearable device in a certain length of time is explained.

For example, if there is purchase that involves a payment of a certain amount of money or higher with electronic money by using the wearable device, a locker for luggage storage or a door for a rest space in a shop is opened, and it becomes possible to use them, by holding the wearable device over to a reader/writer (R/W) installed at the locker, the door, or the like.

In the present embodiment, the second-lock unlocking condition to be set is that the location of the user (wearable device) is in a particular area, and the amount of electronic money used in a certain length of time is equal to or higher than a predetermine specified amount, and so on.

It is decided whether or not the second-lock unlocking condition is satisfied on the basis of location information acquired by a sensor or the like of the wearable device, time information, a use history of particular services of IC card function applications, and the like. Control to lock/unlock the second lock is performed in accordance with a result of the decision.

In the present example, the lock unlocking target service is a service to open and close a locker, a lounge or the like.

### (2) Embodiment in which lock unlocking condition is written on wearable device from reader/writer (R/W) when wearable device is held over to reader/writer (R/W)

Next, an embodiment in which a lock unlocking condition is written on the wearable device from a reader/writer (R/W) when the wearable device is held over to the reader/writer (R/W) is explained.

For example, at an entertainment facility or the like where an IC card function of the wearable device is used as an admission ticket, a service of permitting the user to visit another area in the facility if a condition is satisfied is provided.

It is decided that the condition has been satisfied when the user holds the wearable device over to a particular reader/writer (R/W), and a new lock unlocking condition is written onto the wearable device from the reader/writer (R/W).

For example, the new lock unlocking condition is a lock unlocking condition under which certain contents are deemed to be achieved if the user approaches the next area within two hours after the user has been near the entrance of another area and holds the wearable device over to the reader/writer, and so on.

In this example, the lock unlocking target service is an IC admission ticket providing service for a particular area in the facility.

(3) About other second-lock unlocking decision applications Next, other second-lock unlocking decision applications are explained.

In the embodiments mentioned above, for example, a plurality of second-lock unlocking decision applications such as a step counting application is explained. Other than the examples mentioned above, for example, an activity-amount measurement application can also be used as a second-lock unlocking decision application.

The activity-amount measurement application makes comprehensive determinations about the amount of exercise of the user (the user walks, runs, rides a bicycle, walks up and down stairs, and so on) on the basis of information of a plurality of sensors such as an acceleration sensor, or a heart rate sensor.

By using the application, for example, it becomes possible to perform lock unlocking control based on a condition:
Second-lock unlocking condition = consumed calory of the user has exceeded a specified consumed calory.

In addition, other than the weather information acquisition application, examples of lock unlocking decision applications that do not use information of sensors include various applications including an application for games, quizzes, or the like in which case a lock is unlocked if a problem is solved, and so on, for example, a stamp card or point card application in which case a lock is unlocked if use of a particular service has exceeded a threshold, and so on, for example.

### [9. About Hardware Configuration Example of Information Processing Apparatus]

Next, a hardware configuration example of the information processing apparatus of the present disclosure is explained with reference to FIG. 22.

The configuration depicted in FIG. 22 is explained.

A CPU (Central Processing Unit) 301 functions as a control section or a data processing section that executes various types of process in accordance with a program stored on a ROM (Read Only Memory) 302 or a storage section 308. For example, the CPU 301 executes the processes according to the sequences explained in the embodiment mentioned above. A RAM (Random Access Memory) 303 stores programs executed by the CPU 301, data, and the like. These CPU 301, ROM 302, and RAM 303 are interconnected by a bus 304.

The CPU 301 is connected to an input/output interface 305 via the bus 304, and the input/output interface 305 is connected with an input section 306 including various types of switch, a keyboard, a mouse, a microphone, and the like, and with an output section 307 including a display, a speaker, and the like. The CPU 301 executes various types of process in response to commands input from the input section 306 and outputs processing results to the output section 307, for example.

The storage section 308 connected to the input/output interface 305 includes a flash memory, a hard disk, and the like, for example, and stores programs to be executed by the CPU 301 and various types of data. A communication section 309 functions as a transmitting/receiving section for Wi-Fi communication, Bluetooth (registered trademark) (BT) communication, or other data communication via networks such as the Internet or a local area network and communicates with external apparatuses.

A drive 310 connected to the input/output interface 305 drives a removable medium 311 such as a magnetic disk, an optical disk, a magnetooptical disk, or a semiconductor memory such as a memory card and executes data recording or readout.

### [10. Summary of Configuration of Present Disclosure]

Thus far, embodiments of the present disclosure are explained in detail with reference to a particular embodiment. However, it is selfevident that those skilled in the art can make corrections to, or use substitutes in the embodiment within the scope not deviating from the gist of the present disclosure. That is, the present invention has been disclosed in exemplary forms, and should not be interpreted in a limited manner. In order to determine the gist of the present disclosure, the section of claims should be considered.

Note that the technology disclosed in this specification can have configuration like the ones mentioned below.
(1) An information processing apparatus including:
   a storage section configured to store a first application; and
   a control section configured to acquire sensor information from an installed sensor and execute lock control of disabling use of the first application by prohibiting access to the storage section on a basis of the acquired sensor information.
(2) The information processing apparatus according to (1), in which the control section further executes lock control of the first application on a basis of acquisition information of a lock unlocking decision application.
(3) The information processing apparatus according to (1) or (2), in which the control section executes lock control for each provided service included in the first application.
(4) The information processing apparatus according to any of (1) to (3), in which the control section executes lock control of the first application on a basis of acquisition information of a plurality of different lock unlocking decision applications.
(5) The information processing apparatus according to any of (1) to (4), in which, for the first application, the control section executes
   a first-lock unlocking process based on an input code, and
   a second-lock unlocking process based on acquisition information of the lock unlocking decision application.
(6) The information processing apparatus according to any of (1) to (5), in which
   the information processing apparatus has a memory storing lock unlocking condition information of the first application based on acquisition information of the lock unlocking decision application, and
   the control section compares the lock unlocking condition information stored on the memory, and the acquisition information of the lock unlocking decision application, and executes a lock unlocking process of the first application.
(7) The information processing apparatus according to (6), in which the control section receives the lock unlocking condition information of the first application from an external apparatus and stores the lock unlocking condition information on the memory.
(8) The information processing apparatus according to any of (1) to (7), in which
   the lock unlocking decision application is a step counting application, and
   the control section executes a lock unlocking process of the first application in a case where a step count of a user holding the information processing apparatus has exceeded a specified step count that is a prespecified lock unlocking condition.
(9) The information processing apparatus according to any of (1) to (8), in which
   the lock unlocking decision application is a physical condition management application, and
   the control section executes a lock unlocking process of the first application in a case where it is decided that a physical condition of a user holding the information processing apparatus is good.
(10) The information processing apparatus according to any of (1) to (9), in which
   the lock unlocking decision application is a location information acquisition application, and
   the control section executes a lock unlocking process of the first application in a case where a current location of a user holding the information processing apparatus is in a prespecified area.
(11) The information processing apparatus according to any of (1) to (10), in which
   the lock unlocking decision application is a weather information acquisition application, and
   the control section executes a lock unlocking process of the first application in a case where a current weather is a prespecified weather.
(12) The information processing apparatus according to any of (1) to (11), in which the control section executes lock control of the first application on a basis of acquisition information of the lock unlocking decision application, and time information obtained from a clock.
(13) The information processing apparatus according to any of (1) to (12), in which the information processing apparatus is a wearable device.
(14) An information processing system including:
   a first information processing apparatus, and
   a wearable device, in which
   the wearable device is a device that is able to use a first application,
   the first information processing apparatus transmits, to the wearable device, lock unlocking condition information to be used when lock control including a locking process of disabling use of the first application of the wearable device, and a lock unlocking process of enabling use of the first application of the wearable device is executed, and
   the wearable device
      receives the lock unlocking condition information from the first information processing apparatus and stores the lock unlocking condition information on a memory, and
      compares acquisition information of a lock unlocking decision application that is an application different from the first application and the lock unlocking condition information stored on the memory, and executes lock control of the first application.
(15) An information processing method executed in an information processing apparatus, in which
   the information processing apparatus has a storage section storing a first application, and
   a control section acquires sensor information from an installed sensor, and executes lock control of the first application of disabling use of the first application by prohibiting access to the storage section on a basis of the acquired sensor information.
(16) An information processing method executed in an information processing system having a first information processing apparatus, and a wearable device, in which
   the wearable device is a device that is able to use a first application,
   the first information processing apparatus transmits, to the wearable device, lock unlocking condition information to be used when lock control including a locking process of disabling use of the first application of the wearable device and a lock unlocking process of enabling use of the first application of the wearable device is executed, and
   the wearable device
      receives the lock unlocking condition information from the first information processing apparatus and stores the lock unlocking condition information on a memory, and
      compares acquisition information of a lock unlocking decision application which is an application different from the first application and the lock unlocking condition information stored on the memory, and executes lock control of the first application.
(17) A program causing information processing to be executed in an information processing apparatus, in which
   the information processing apparatus has a storage section storing a first application, and
   the program causes a control section to acquire sensor information from an installed sensor and execute lock control of the first application of disabling use of the first application by prohibiting access to the storage section on a basis of the acquired sensor information.

In addition, a series of processes explained in the specification can be executed by hardware, software, or a combined configuration of both hardware and software. In a case where the processes are executed by software, a program having process sequences recorded thereon can be installed on a memory in a computer incorporated into dedicated hardware and executed thereon, or the program can be installed on a generalpurpose computer that can execute various types of process and executed thereon. For example, the program can be recorded in advance on a recording medium. Other than being installed from the recording medium onto a computer, the program can be received via networks like a LAN (Local Area Network) and the Internet and installed on a recording medium such as a built-in hard disk.

Note that various types of process described in the specification may not only be executed in time series in accordance with the description, but may be executed in parallel or individually in accordance with the processing capability of an apparatus that executes the processes or as necessary. In addition, in this specification, systems are a logical collective configuration of a plurality of apparatuses, and systems are not limited to ones having apparatuses of individual configurations that are located in the same housing.

### [Industrial Applicability]

As explained above, according to the configuration of one embodiment of the present disclosure, a configuration that performs lock control such as unlocking of IC card function providing applications in various types of fine condition setting is realized.

Specifically, for example, the configuration has the control section that executes lock control including a locking process in which use of an IC card function providing application is disabled and a lock unlocking process in which use of the IC card function providing application is enabled. On the basis of acquisition information of a lock unlocking decision application which is an application different from the IC card function providing application, the control section executes the lock control of the IC card function providing application. For example, in a case where a step count of a user counted by a step counting application has exceeded a specified step count that is a prespecified lock unlocking condition, the control section executes the lock unlocking process of the IC card function providing application.

According to this configuration, the configuration that performs lock control such as unlocking of IC card function providing applications in various types of fine condition setting is realized.

### [Reference Signs List]

- 10:: User
- 11:: IC card
- 20:: Shop
- 21:: Reader/writer (R/W)
- 32:: Information processing apparatus (user terminal)
- 100:: Information processing apparatus
- 101:: Smartphone
- 102:: Wearable terminal
- 151:: Control section (microcomputer etc.)
- 152:: Operation section
- 153:: Display section
- 154:: Secure element
- 155:: Memory
- 156:: Clock
- 160:: Group of various types of sensor
- 170:: First communication section
- 180:: Second communication section
- 190:: Power supply section
- 301:: CPU
- 302:: ROM
- 303:: RAM
- 304:: Bus
- 305:: Input/output interface
- 306:: Input section
- 307:: Output section
- 308:: Storage section
- 309:: Communication section
- 310:: Drive
- 311:: Removable medium

## Claims

1. An information processing apparatus comprising:
a storage section configured to store a first application; and
a control section configured to acquire sensor information from an installed sensor and execute lock control of disabling use of the first application by prohibiting access to the storage section on a basis of the acquired sensor information.

2. The information processing apparatus according to claim 1, wherein the control section further executes lock control of the first application on a basis of acquisition information of a lock unlocking decision application.

3. The information processing apparatus according to claim 1, wherein the control section executes lock control for each provided service included in the first application.

4. The information processing apparatus according to claim 1, wherein the control section executes lock control of the first application on a basis of acquisition information of a plurality of different lock unlocking decision applications.

5. The information processing apparatus according to claim 1, wherein, for the first application, the control section executes
a first-lock unlocking process based on an input code, and
a second-lock unlocking process based on acquisition information of the lock unlocking decision application.

6. The information processing apparatus according to claim 1, wherein
the information processing apparatus has a memory storing lock unlocking condition information of the first application based on acquisition information of the lock unlocking decision application, and
the control section compares the lock unlocking condition information stored on the memory and the acquisition information of the lock unlocking decision application and executes a lock unlocking process of the first application.

7. The information processing apparatus according to claim 6, wherein the control section receives the lock unlocking condition information of the first application from an external apparatus and stores the lock unlocking condition information on the memory.

8. The information processing apparatus according to claim 1, wherein
the lock unlocking decision application is a step counting application, and
the control section executes a lock unlocking process of the first application in a case where a step count of a user holding the information processing apparatus has exceeded a specified step count that is a prespecified lock unlocking condition.

9. The information processing apparatus according to claim 1, wherein
the lock unlocking decision application is a physical condition management application, and
the control section executes a lock unlocking process of the first application in a case where it is decided that a physical condition of a user holding the information processing apparatus is good.

10. The information processing apparatus according to claim 1, wherein
the lock unlocking decision application is a location information acquisition application, and
the control section executes a lock unlocking process of the first application in a case where a current location of a user holding the information processing apparatus is in a prespecified area.

11. The information processing apparatus according to claim 1, wherein
the lock unlocking decision application is a weather information acquisition application, and
the control section executes a lock unlocking process of the first application in a case where a current weather is a prespecified weather.

12. The information processing apparatus according to claim 1, wherein the control section executes lock control of the first application on a basis of acquisition information of the lock unlocking decision application and time information obtained from a clock.

13. The information processing apparatus according to claim 1, wherein the information processing apparatus is a wearable device.

14. An information processing system comprising:
a first information processing apparatus, and
a wearable device, wherein
the wearable device is a device that is able to use a first application,
the first information processing apparatus transmits, to the wearable device, lock unlocking condition information to be used when lock control including a locking process of disabling use of the first application of the wearable device and a lock unlocking process of enabling use of the first application of the wearable device is executed, and
the wearable device
receives the lock unlocking condition information from the first information processing apparatus and stores the lock unlocking condition information on a memory, and
compares acquisition information of a lock unlocking decision application that is an application different from the first application and the lock unlocking condition information stored on the memory and executes lock control of the first application.

15. An information processing method executed in an information processing apparatus, wherein
the information processing apparatus has a storage section storing a first application, and
a control section acquires sensor information from an installed sensor and executes lock control of the first application of disabling use of the first application by prohibiting access to the storage section on a basis of the acquired sensor information.

16. An information processing method executed in an information processing system having a first information processing apparatus and a wearable device, wherein
the wearable device is a device that is able to use a first application,
the first information processing apparatus transmits, to the wearable device, lock unlocking condition information to be used when lock control including a locking process of disabling use of the first application of the wearable device and a lock unlocking process of enabling use of the first application of the wearable device is executed, and
the wearable device
receives the lock unlocking condition information from the first information processing apparatus and stores the lock unlocking condition information on a memory, and
compares acquisition information of a lock unlocking decision application which is an application different from the first application and the lock unlocking condition information stored on the memory and executes lock control of the first application.

17. A program causing information processing to be executed in an information processing apparatus, wherein
the information processing apparatus has a storage section storing a first application, and
the program causes a control section to acquire sensor information from an installed sensor and execute lock control of the first application of disabling use of the first application by prohibiting access to the storage section on a basis of the acquired sensor information.
